# EUROPEAN PATENT SPECIFICATION

(11) **EP 1 782 867 B1**
(45) Date of publication and mention of the grant of the patent: **25.07.2012**
(21) Application number: 05755741.5
(22) Date of filing: 30.06.2005
(51) Int. Cl.: A63F 13/12, A63F 13/10

(54) **GAME APPARATUS**
SPIELAPPARAT
APPAREIL DE JEU

(30) Priority: 25.08.2004 JP 2004244687
(43) Date of publication of application: 09.05.2007
(73) Proprietor: Konami Digital Entertainment Co., Ltd., Tokyo 107-8324 (JP)
(72) Inventor: KOBAYASHI, Kenji, Konami Digital Ent. Co., Ltd., Tokyo 107-8324 (JP); NAKAMURA, Masaru, Konami Digital Ent. Co., Ltd., Tokyo 107-8324 (JP); TAMURA, Ryuta, Konami Digital Ent. Co., Ltd., Tokyo 107-8324 (JP); WAKITA, Jun, Konami Digital Ent. Co., Ltd., Tokyo 107-8324 (JP); TERAO, Yukizumi, Konami Digital Ent. Co., Ltd., Tokyo 107-8324 (JP)
(74) Representative: Winter, Brandl, Fürniss, Hübner, Röss, Kaiser, Polte - Partnerschaft
(86) International application number: PCT/JP2005/012054
(87) International publication number: WO 2006/022080

(56) References cited:
- WO-A-01/46829
- JP-A- 9 099 175
- JP-A- 2004 057 224
- JP-A- 2004 097 622
- US-A- 5 816 920
- US-A1- 2004 018 876

## Description

### TECHNICAL FIELD

The present invention relates to a game device for use in a network-type game system.

### BACKGROUND ART

In a game system as described in Japanese Patent Application Laid-Open Publication No. 2004-081809 (hereinafter referred to as JP2004-081809), each game device (game terminal) transmits, during the game, information relating to the game device itself via a network to a server device (game server), and the game device receives from the server device information regarding other players. It is further described in JP 2004-081809 that one or more game devices may act as a server device. In other words, JP 2004-081809 discloses a master and slave communication method wherein one server device or a game device acts as a master and the other game devices act as slaves in a network-type game system.

In a game system adopting the master/slave communication method, however, in the event that the master becomes unable to communicate with other devices during a game, exchanges of information between all game devices are stopped, which in turn makes continuation of the game impossible for all the game devices. That is, although only a single device may be suffering from a communication failure, the game is interrupted for all the game devices.

Document US-A-5 816 920 describes a plurality of game terminals for playing a multiplayer game, which are connected together in a loop via communication interfaces and transfer lines. Each of the game terminals is configured to transfer game information to and from the other game terminals through the corresponding communication interfaces and transfer lines. Moreover, each game terminal includes a means for setting itself as a master or slave, wherein if a game terminal detects absolutely no data when it starts up, it determines that it is the first machine to enter the system and sets itself to be the master machine. If there are data on the transfer linqes when a game terminal starts up, it determines that there is another game terminal in the system that have already set itself to be the master machine, so it sets itself to be a slave machine.

Document US 2004/0018876 A1 describes a plurality of clients which are managed by a respective arcade's server, wherein the clients (game devices) itself do not communicate with each other. One of the pluralities of arcade's servers has the role of a master server, whereas the other arcade's servers have the role of a slave server. Therefore, the master server communicates with all of the slave servers in order to transmit operation signals from the client terminal devices so that the slave servers itself do not communicate with each other. In the arcade's server there is provided an abnormality monitoring section that detects a disconnected circuit and a circuit disconnection section that disconnects the connection with the device that is connected through the disconnected circuit. A simulated signal generation section generates simulated generation signals that simulate the necessary operation signals for progress of the game for each client terminal device connected through the disconnected circuit, wherein the simulated operation signals are then transmitted to each of the client terminal devices (which are still connected).

### DISCLOSURE OF INVENTION

The present invention has been made in consideration of the above problems, and it has an object to provide a game device for use in a game system in which no such situation as described above can take place.

In the following, a description will be given of the present invention. It should be noted that reference numerals in the attached drawings are shown in parentheses to facilitate understanding of the present invention, but this is not intended to limit the present invention to the embodiments as shown in the drawings.

The invention is defined by independent claim 1. The dependent claims are directed to preferred embodiments of the invention.

In one aspect, a game device (2B) according to the present invention comprises: a communicator (21, 22) that communicates with other game devices (2A, 2C, 2D) on a one-to-one basis; a game program executor (21) that executes a game program so as to enable a player to play a game; a controller (21, SC1 to SC5) that identifies two or more of the other game devices (2A, 2C) as participants of a game and that causes the game program executor (21) to start the game; a game information generator (21, SC8, SJ1 to SJ11) that generates game information in accordance with progress of the game that is being played and transmits, by means of the communicator (21, 22), the generated game information to each of the two or more game devices; and a changer (21, SC8, SK1 to SK7) that causes changes in progress of the game depending on the game information after receiving, by means of the communicator (21,22), the game information being generated at each of the two or more game devices.

When a game system is configured using 3 or more of the above game devices, even in a case in which one of the game devices becomes unable to perform communication, game information can be transmitted and received among the other game devices. In a master/slave communication system in which a master transmits instructions to slaves, game information can no longer be transmitted or received in a case in which the master becomes unable to perform communication even if the remaining two or more game devices are in normal states. According to the above game device, however, the remaining two or more game devices can continue playing a game even if one of the game devices becomes unable to perform communication.

In another aspect, the controller (21, SC1-SC5) comprises: a decider (21, SC2, SC3) that decides whether the game device itself will act as a master or as a slave based on a predetermined condition; a storage device (27) that stores communication addresses of other game devices (2A, 2C) participating in the game; a master-function executor (21, SC4) that, in a case in which it is determined by the decider (21, SC2, SC3) that the game device itself will act as a master, waits for a game participation request from other devices that will act as slaves (2A, 2C, 2D); upon receiving the game participation request, replies with a response indicating permission for participating in the game as long as the number of participants does not reach the predetermined number; stores, in the storage (27), communication addresses of the two or more other game devices (2A, 2C) that will act as slaves; and transmits, to each of the other game devices that respectively will act as one of the slaves, a communication address of a game device that will act as another of the slaves; and a slave-function executor (21, SC5) that, in a case that it is determined by the decider that the game device itself (2B) will act as a slave, transmits to one of the other game devices being a candidate for a master (2A), a game participation request; and stores in the storage (27), upon receiving, from the one game device that will act as a master (2A), a response indicating permission for participating in the game, a communication address of a game device that will act as another slave (2C) and a communication address of the one game device that will act as a master (2A), and the game information generator (21, SC8, SJ1-SJ11) uses the communication addresses stored in the storage (27) to transmit the game information to each of the two or more other game devices (2A, 2C).

According to this aspect of the invention, during a participant grouping process (entry period) for identifying a plurality of game devices that will participate in the same game, the master/salve system is adopted, thereby enabling the grouping of game participants. In a multiplayer online (MMO: Massively Multiplayer Online) game, game participants of the same group must be identified before starting a game. Although a server device other than a game device could instead perform the participant grouping, a heavy burden is put on the server device in a case in which many game devices want to participate in a game. As an alternative, it is possible, in theory, for many game devices to perform the participant grouping by communicating with one another with an equal relationship, but the traffic between game devices increases considerably. In this aspect of the invention, the participant grouping is performed at a master game device, to thereby reduce the burden placed on the server device and also to reduce the traffic between game devices.

Preferably, the master-function executor (21, SC4) may notify the two or more other game devices (2A, 2C) of a start time of the game and control the game program executor (21) to execute the game program at the start time so that an enablement for a player's play of a game is started; and the slave-function executor (21, SC5), upon receiving the start time from a master, may control the game program executor (21) to execute the game program at the start time so that an enablement for a player's play of a game is started.

When a game system is configured using 3 or more of the above game devices, the start of a game can be synchronized between these game devices.

In still another aspect, the controller may comprise (21, SF10, SH7) a communication-mode shifter that, when a predetermined condition is satisfied, shifts a communication mode between the game device and the two or more other game devices (2A, 2C), to another communication mode in which the game device communicates in parallel with each of the two or more other game devices (2A, 2C) and the game information generator (21, SC8, SJ1-SJ11) and the changer (21, SC8, SK1-SK7) operate effectively. According to this aspect, when a predetermined condition is satisfied, the master/slave relationship can be dissolved and be changed to an individual communication mode. Therefore, even if one of the game devices becomes unable to communicate during the playing of a game, the game can be reliably continued by the remaining two or more game devices.

In one aspect, the predetermined condition relating to the shifter may include the master-function executor (21, SC4) having notified the start time of the two or more other game devices (2A, 2C), or the slave-function executor (21, SC5) having received, from the master, the notification of the start time. According to this aspect, the start of a game can be reliably synchronized among a plurality of game devices. Furthermore, when the game starts, a communication mode is changed to an individual communication mode in which game devices communicate with one another with an equal relationship. What is most important in a multiplayer online game is transmitting and receiving of game information during a game. According to this aspect of the invention, a communication mode is shifted to the individual communication mode, the shifting being triggered by the start of a game. Therefore, even if a game device becomes unable to communicate during a game, the game can be continued by continuing communication among the other devices. In a case in which a game device becomes unable to communicate during the participant grouping before the game play, the game device cannot play a game with other game devices. In such a case, it is preferable that the game device be able to take alternative measures so that a user of the game device can engage in another game play.

In another aspect, the game device may further comprise: a display (24) that displays an image; and an input device (23) that outputs a signal corresponding to a player's operation. With this configuration, the game program executor (21) may conduct the game according to the signal and cause an image to be displayed on the display (24), the image corresponding to progress of the game; the game information generator (21, SC8, SJ1-SJ11) may generate, as game information, score information indicating score obtained depending on operations of the input device (23), and transmit the score information to each of the two or more other game devices (2A, 2C); and the changer (21, SC8, SK1-SK7), upon receiving the score information as the game information, may cause an image based on the received score information to be displayed on the display (24). Alternatively, the game information generator (21, SC8, SJ1 to SJ11) may generate in response to an operation of the input device (23), as the game information, attack information specifying a game element disadvantageous to another game participant, and transmits the attack information to at least one of the two or more other game devices (2A, 2C); and the changer (21, SC8, SK1-SK7), upon receiving the attack information as the game information, may cause an image to be displayed on the display (24), the image being based on the game element specified by the received attack information.

According to this aspect, a player can play a game while viewing images corresponding to game progress of other players. A game comprises images displayed on a display and sounds output from a speaker. Images and sounds can thus be considered as individual parts constituting a game. For example, images of a game comprise a background, a moving object, a blind that makes the object less visible, and their lightness, and the like. Game sounds comprise music sounds, effect sounds made at the time when a user obtains points, or tempo of music sounds, and the like. A game element corresponds to an individual part constituting game images and sounds and is given as a parameter. Specifying a game element enables rendering of visual and/or audio effects that increase the degree of difficulty of a game. For example, a game element includes narrowing the width of a game screen that is being displayed, darkening or swinging the displayed screen, decreasing the volume of music sounds, and delaying an output timing of output music sounds.

In still another aspect, the above game device may further comprise a destination identifier (21, SJ11) that identifies, based on a signal from the input device, which one of the other game devices (2A, 2C, 2D) will be a destination of the attack information, and the game information generator (21, SC8, SJ1 to SJ11) may transmit the generated attack information to the one game device (2A, 2C, 2D) identified by the destination identifier. According to this aspect, a user can interfere with the play of another player as desired.

In one aspect, the above game device may further comprise a detector (21, SK5) that monitors communication with the two or more other game devices (2A, 2C) participating in the game to detect an interruption of communication, and the game information generator (21, SC8, SJ1 to SJ11) may suspend transmission of the game information to another game device (2A) on which the communication interruption has been detected by the detector (21, SK5), and continue transmission of the game information to another game device (2C) which continues to participate in the game. According to this aspect, useless transmission is reduced, and therefore, communication resources are conserved. Furthermore, communication is continued between remaining game devices, and the effects on a game due to a communication failure can be minimized.

In another aspect, the game program executor (21) may play the game as a participant substituting the game device (2A) on which the communication interruption has been detected by the detector (21, SK5), generate the game information that was to be generated by the game device on which the communication interruption has been detected, and give the game information to the changer (21, SC8, SK1 to SK7), and the changer (21, SC8, SK1 to SK7) may obtain the game information from the game program executor (21) instead of receiving the game information from the game device (2A) on which the communication interruption has been detected by the detector (21, SK5), continue obtaining the game information from the another game device (2C) which continues to participate in the game, and causes changes in the progress of the game according to the obtained game information. According to this aspect, even in a case in which one game device becomes unable to communicate while playing a game and even if the contents of the game could considerably change depending on the number of game participants, the game device is replaced by the game program executor. Therefore, a game can be continued with little or a few changes in game contents. Preferably, the changer stores game information, and when a communication interruption is detected, the game program executor may refer to the stored contents to take over game information immediately previous to the detection of the communication interruption and cause changes in the game progress. For example, in a case in which game information is score information, the score in a game played by a game program executer is added to the score immediately previous to the detection of the communication interruption, the game program executer substituting a game device for which a communication interruption has been detected, and the result of addition is regarded as the score of another game participant.

In still another aspect, the game program executor (21) may sequentially play a plurality of music pieces according to the program, and start playing the game as a participant substituting the game device for which the communication interruption has been detected by the detector (21, SK5), the substitution starting at start of a music piece that follows a music piece being played at the time of the communication interruption being detected by the detector. According to this aspect, another game device that has become unable to communicate can be replaced by a game program executor without interrupting the flow of a game.

### EFFECTS OF THE INVENTION

According to the present invention, it is possible to provide a game device for use in a game system in which, even in a case in which one of game devices becomes unable to perform communication, game information can be mutually transmitted and received between the other game devices. In this game system, even if one game device becomes unable to perform communication, the remaining two or more game devices can continue a game.

### BRIEF DESCRIPTION OF DRAWINGS

Fig. 1 shows an overall configuration of a game system according to an embodiment of the present invention.
Fig. 2 shows an example of a game screen displayed, during a game, on a game device of the game system of Fig. 1.
Fig. 3 shows simplified actions of the game system of Fig. 1.
Fig. 4 shows an electric configuration of a data server of the game system of Fig. 1.
Fig. 5 shows examples of details of an individual information table stored in the data server of Fig. 4.
Fig. 6 shows an electric configuration of a lobby server of the game system of Fig. 1.
Fig. 7 shows an electric configuration of a game device of the game system of Fig. 1.
Fig. 8 shows examples of details of a game participant table stored in the game device of Fig. 7.
Fig. 9 is a sequence chart for describing an operational example of the game system of Fig. 1.
Figs. 10A and 10B are sequence charts for describing an operational example of a further phase of the game system of Fig. 1.
Fig. 11 is a sequence chart for describing an operational example of a further phase of the game system of Fig. 1.
Fig. 12 is a sequence chart for describing an operational example of a further phase of the game system of Fig. 1.
Fig. 13 is a flow chart showing an authentication process executed by the game device of Fig. 7.
Fig. 14 is a flow chart showing an individual information authentication/registration process executed by a data server of Fig. 4.
Fig. 15 shows an example of details of an individual information table stored in the data server of Fig. 4.
Fig. 16 is a flow chart showing a game process of the game device of Fig. 7.
Figs. 17A and 17B are flow charts showing a master/slave determination process in the flow of Fig. 16.
Fig. 18 is a flow chart showing a lobby server process of Fig. 6.
Figs. 19A and 19B are flow charts showing a master process of the flow of Fig. 16.
Fig. 20 is a flow chart showing a participant-add process of the flow of Fig. 19A.
Figs. 21A and 21B are flow charts showing a slave process of the flow of Fig. 16.
Fig. 22 is a flow chart showing an exchange-information-transmission process of the flow of Fig. 16.
Fig. 23 is a flow chart showing an exchange-information-receiving process of the flow of Fig. 16.

### BEST MODE FOR CARRYING OUT THE INVENTION

### Configuration:

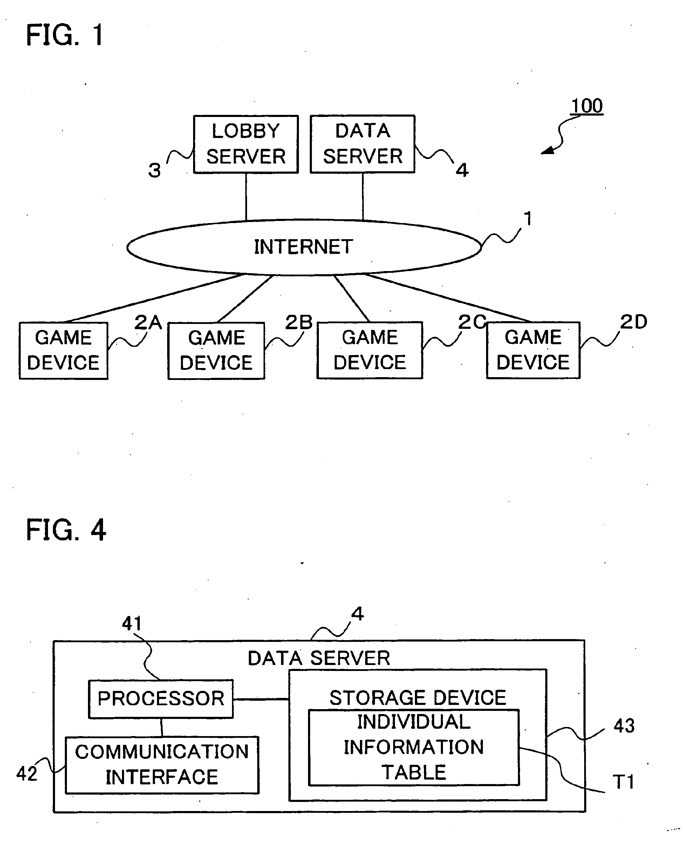

Fig. 1 shows an overall configuration of a game system 100 according to the present invention.

Game system 100 has arcade game devices 2A to 2D, a lobby server 3, and a data server 4. Game system 100 executes a game (multiplayer online game; MMO (Massively Multiplayer Online) game) played by a maximum of 3 players (3 game devices).

Description will now be given of the details of the game. In the following, game devices 2A to 2D will be referred to collectively as "game device 2."

In the game, 3 mini games are sequentially executed. Each game starts with the start of a piece of music, proceeds as the music is played, and finishes when the music ends. Thus, the game is a series of the first music mini game (*n*=1), the second music (*n*=2), and the third music mini game (*n*=3), where "*n*" shows the order of music played and is expressed as one of integers 1 to 3.

There is shown, in the middle portion of the game screen, an image indicating how objects OB appear in an upper portion of the figure, fall, and disappear in a lower portion of the figure to the music played. There is a plurality of types of objects OB. In the image, there exists, slightly above a point at which objects OB disappear, a horizontal line HL orthogonal to a falling direction of objects OB. If a player performs, at a time in which an object OB overlaps with the horizontal line HL, an operation corresponding to the type of the object OB, game device 2 outputs a sound corresponding to the type of object OB. Thus, a selected music piece is more accurately reproduced if a player's operation is performed at a more suitable timing and with a more suitable content.

In the lower portion of the game screen, there are shown images indicating the player's score, bonus points, a manipulation timeliness gauge MG, and an attack level AL. The score is increased if, when an object OB overlaps with the horizontal line HL, an operation corresponding to the object OB is performed. The bonus points are added in a case in which the difference between the timing of the operation and the ideal timing of the operation is equal to or smaller than a predetermined first range; and the bonus points are initialized to 0 when the difference exceeds the first range. After the music ends, the bonus points are multiplied with a predetermined coefficient, and the product is added to the score.

The manipulation timeliness gauge MG shows by length an accumulated value of manipulation timeliness. In a case in which the difference between the timing of the operation and the ideal timing of the operation is equal to or smaller than a second range, the accumulated value of manipulation timeliness increases. The attack level AL is a degree of strength of an attack on other players. The attack level AL is set to "1" when the accumulated value of manipulation timeliness is below a threshold, and it is "2" when the value is equal to or larger than the threshold. In a case in which a predetermined type of an object OB overlaps the horizontal line HL and an operation corresponding to the object OB is performed, an attack (interference) is made on another player, the strength of the attack corresponding to an attack level AL as of the time when the operation is performed. The accumulated value of manipulation timeliness then returns to the initial value (the minimum value).

In the left portion of the game screen, there is shown a character image selected from among a prepared set of a plurality of candidates, the selection being made by a current player of the game device.

In the right portion of the game screen, there are shown images of player information for all the players who are currently playing a game (including those who are viewing the game image), where the images are shown for the maximum number of players (3 players) allowed to participate in a game. Player information includes a player name, a current score, a title (degree), a current quote (speech), and a partial image of a character image. A part of a character image selected by another player using another game device 2 is clipped and reduced in size to obtain a partial image of a character image.

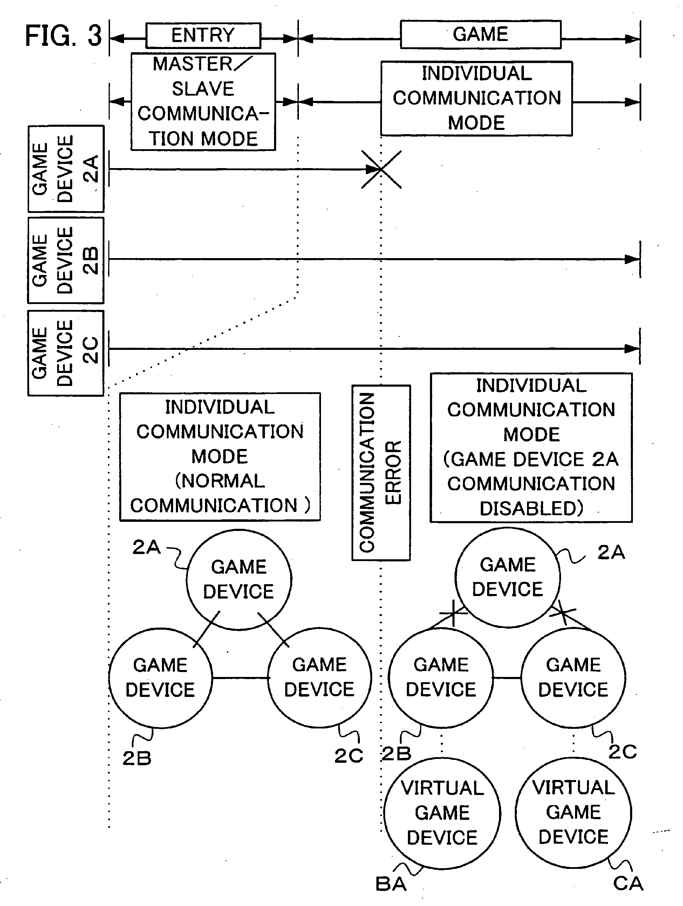

Fig. 3 shows simplified actions of game system 100.

In game system 100, participants are grouped prior to the start of a game. The participant grouping is to decide a group of competitors who will play a game. A period for the participant grouping is an entry period, and the entry period ends at the start of a game. The participant grouping during the entry period is performed in a master-slave communication mode. In the master-slave communication mode, each slave communicates with only one master. In a case in which, for example, game device 2A is a master and in which game devices 2B and 2C are slaves, game devices 2B and 2C communicate only with game device 2A. It is decided in an initial phase of the entry period which device will be a master.

Once the entry period ends and a game is started, a communication control method is changed from the master-slave mode to an individual communication mode. In the individual communication mode, the game devices are equal in position in terms of communication control, and each game device is able to communicate with any other game device. Therefore, even if an error takes place to cause game device 2A to be unable to communicate, game devices 2B and 2C can continue playing the game since game devices 2B and 2C are still able to communicate with each other. Game device 2B generates in its computer a virtual game device BA, to cause the virtual game device BA to substitute game device 2A. Game device 2C also generates in its computer a virtual game device CA, to cause the virtual game device CA to substitute game device 2A. Thus, although the contents of the game are changed due to the reduction in the number of players, the changes are minimized. A virtual game device is a function of a computer that operates virtually and autonomously as a game device, and it operates as if game device 2A continued playing the game for game devices 2B and 2C, while in reality game device 2A has become unable to communicate. Game device 2A, which is not able to communicate, may generate virtual game devices, each substituting other game devices 2B and 2C, to continue playing the game.

Fig. 4 is an electric configuration of data server 4.

Data server 4 manages individual information of players, and it comprises a processor 41 such as a CPU (Central Processing Unit), a communication interface 42, and a storage device 43. Communication interface 42 relays data between processor 41 and the Internet 1. Processor 41 communicates with each game device 2 via communication interface 42. Storage device 43 has a ROM (Read Only Memory) with IPL (Initial Program Loader) written therein, a RAM (Random Access Memory) used as a work area, and a hard disk where an individual information table T1 has been reserved. There is written in the hard disk a program for causing a processor to implement an individual-information-authentication /registration process (described later). Processor 41 reads the IPL from ROM for execution, thereby to read from the hard disk the program for implementing the individual-information -authentication/ registration process for execution.

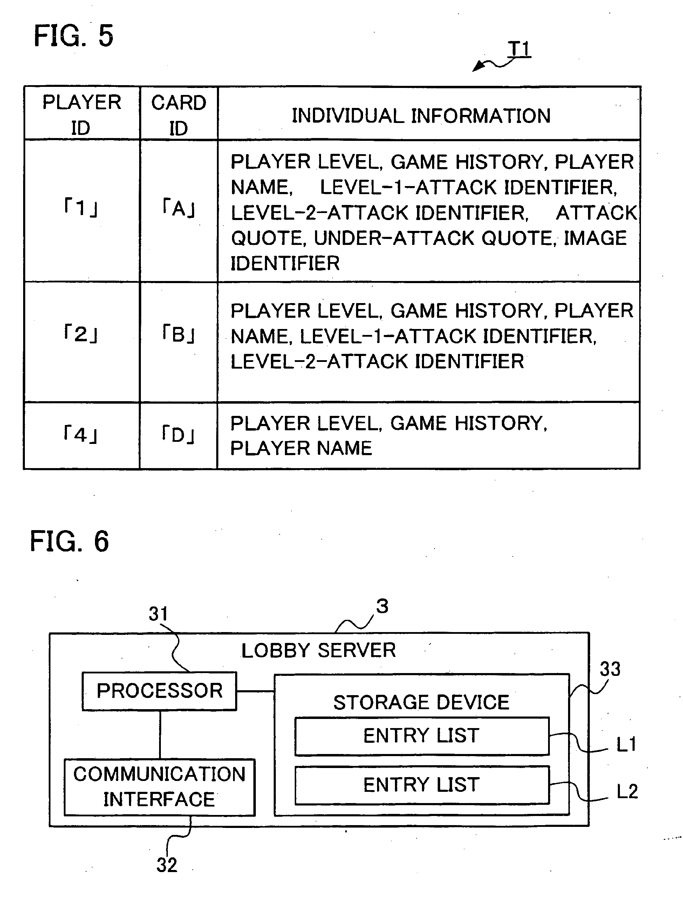

Fig. 5 shows examples of contents of individual information table T1.

There are stored in individual information table T1, a player ID, a card ID, and individual information for each of the users of game system 100, the users including those who are potential players for a game device. A player ID is an identifier that is unique to a user, and it is assigned to a user by a game operator. A card ID is an identifier that is unique to a card used by a user in a game, and it is written on the card. A card is provided to each user. Individual information is information relating to a user, and it is associated with a combination of a player ID and a card ID, so that a single user is able to use more than one card.

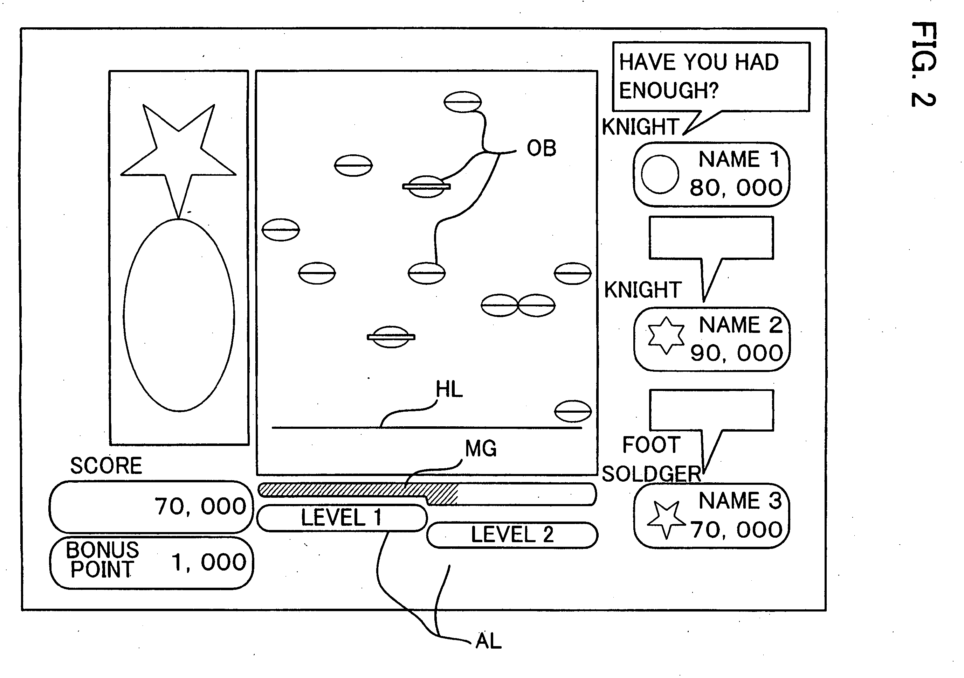

Items contained in individual information of a user are a player level, a game history, a player name, a Level-1-attack identifier, a Level-2-attack identifier, an attack quote, an under-attack quote, and an image identifier. A player level is an indicator of playing skills of the user of this particular type of game, and it is expressed as one of integers from 1 to 30, inclusive. A game history is a history of games played by the user. A player name is the user's name. A Level-1-attack identifier shows a type of an attack made on other players during a game play in a case in which the attack level AL is 1. A Level-2-attack identifier shows a type of an attack made on another player during a game play in a case in which the attack level is 2. A Level-1-attack identifier and a Level-2-attack identifier can be selected by the user, while not playing a game, from among a plurality of candidates. An attack quote is a quote used when performing attack actions during a game play, and an under-attack quote is a quote used when receiving an attack during a game play. These quotes are displayed on a game screen of a game device used by other players during a game (refer to Fig. 2). These quotes can be edited by the user while not playing a game. An image identifier shows a character image selected by the user.

Fig. 6 is an electric configuration of lobby server 3 of the game system of Fig. 1.

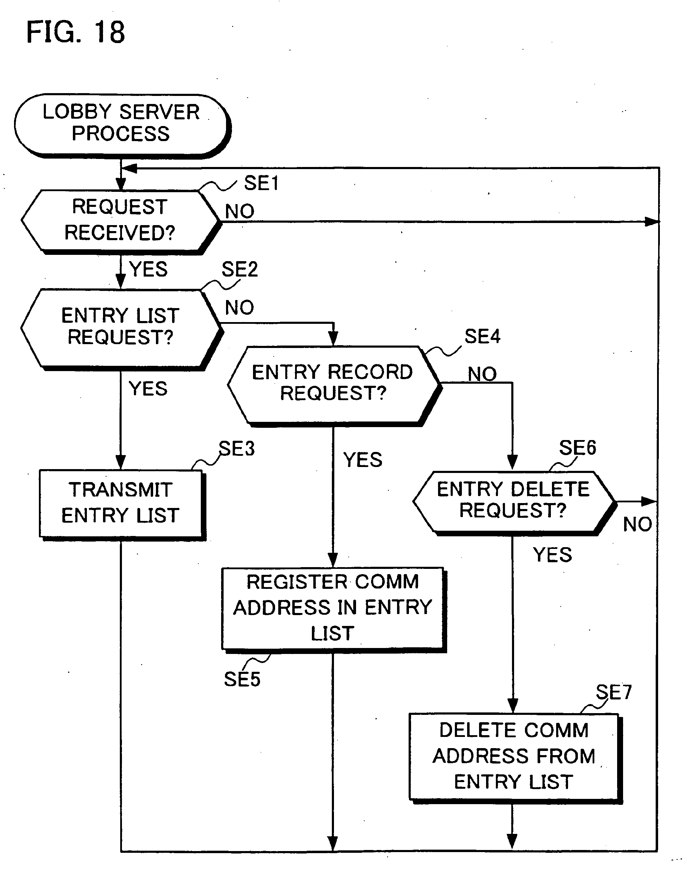

Lobby server 3 receives a request for game participation from each game device and replies thereto. Lobby server 3 has a processor 31 that is, for example, a CPU, a communication interface 32, and a storage device 33. Communication interface 32 relays data between processor 31 and the Internet 1. Processor 31 communicates with game device 2 via communication interface 32. Storage device 33 has a ROM having stored an IPL, a RAM used as a work area, and a hard disk where a program has been written, the program causing a processor to execute a lobby server process (described later) shown in Fig. 18. Processor 31 reads the IPL from the ROM for execution, thereby reading from the hard disk the program for executing the lobby server process for execution.

Entry lists L1 and L2 are reserved in the RAM of storage device 33. Entry lists L1 and L2 are for storing communication addresses of one or more master game devices which are currently accepting requests for game participation. The entry lists are empty before the process of the lobby server is started (in an initial state), and are updated in the process of the lobby server. An entry list L1 is an entry list for players whose player levels are relatively low, and an entry list L2 is for players whose player levels are relatively high, and either entry list L1 or L2 is used depending on contents of a request from a game device.

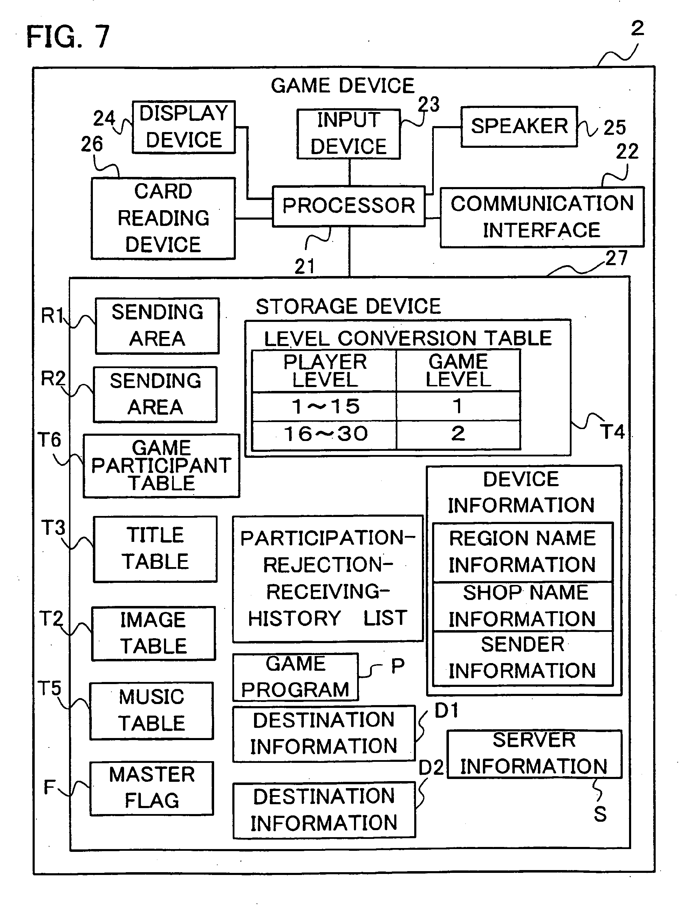

Fig. 7 is an electric configuration of game device 2 of the game system of Fig. 1.

Game device 2 executes a program to enable a player to play a game. Game device 2 has a processor 21 that is, for example, a CPU, a communication interface 22, an input device 23, a display device 24, a speaker 25, a card reader 26, and a storage device 27. Communication interface 22 relays data between processor 21 and the Internet 1. Processor 21 communicates with other game devices 2, lobby server 3, and data server 4 via communication interface 22. Input device 23 comprises a plurality of buttons. When a button is depressed, input device 23 generates an input signal unique to the pressed button to supply the input signal to processor 21. Display device 24 displays video images after receiving image data from processor 21. Speaker 25 outputs sounds after receiving a music sound signal from processor 21. Card reader 26, when a card used for a game is set in card reader 26, reads a card ID from the set card for supply to processor 21.

Storage device has a ROM and has a RAM used as a work area.

An image table T2, a title table T3, a level conversion table T4, and a music table T5 are reserved in the ROM, and device information, destination information D1, destination information D2, and a game program P are stored in the ROM. Sending areas R1 and R2, a mater flag F, and a game participant table T6 are reserved in the RAM in storage device 27. Processor 21 executes the game program P, thereby acting as a game program executor that enables a player to player a game.

In the image table T2, data showing an image identifier unique to a character image and image data used for displaying the character image are stored in association with each other, for each of a plurality of character image candidates that can be used by an unspecified user using the game device.

In the title table T3, data showing a title identifier unique to a title, text data used for display of the title, and data showing a range of player levels corresponding to the title are stored in association with one another, for each of a plurality of titles that can be used in a game by an unspecified user using the game device. Titles are noun phrases associated with historical military ranks (degrees). A title suggesting a high rank (for example, "General") is associated with a high player level; and a title suggesting a low rank (for example, "Foot-soldier") is associated with a low player level.

The level conversion table T4 is used for converting a player level into a corresponding game level. The level conversion table T4 stores possible values of game levels and a range of player levels corresponding to each game level. Specifically, "1" is identified as a game level if the player level is from 1 inclusive to 15 inclusive, and "2" is identified as a game level if the player level is from 16 inclusive to 30 inclusive.

Description will now be given of a game level. In this game, in a case in which a player level of a player who participates in the game is considerably different from those of other players, the course of the game can be easily foreseen, and the game becomes less enjoyable (i.e., the game is not an equal match). To avoid this, it can be conceived that only the players of the same player level are allowed to participate in a game. In this way, however, it takes longer to recruit participants for the minimum required number for the game because the player levels are finer. To reduce the time it would take, the divisions of player levels could be made coarser, but player levels as indices of skills would become less accurate. Game system 100, therefore, allows participation of players only when their game levels are the same. Game levels are indices of degree of difficulty of the game, and divisions thereof are set far coarser than the divisions of player levels. Specifically, the divisions of player levels are 30 levels from 1 to 30, whereas the divisions of game levels are 2 levels of 1 and 2. Thus, the time required for recruiting participants for the minimum number required for the game is sufficiently shortened.

Stored in association with one another in the music table T5 are data showing a music identifier unique to a music piece, data identifying a title of the music piece, music data used for reproducing the music piece, and a game level. Music pieces include those that are relatively low in game difficulty and those that are high in game difficulty, the former being 1 in its game level and the latter being 2 in its game level.

Device information is information that is unique to each game device 2, and includes a communication address that indicates a communication address of game device 2, shop name information that indicates a name of a shop (hereinafter, "shop name") where game device 2 is installed, and location name information that indicates a name of a region where the shop is located.

The device information D1 shows a communication address of lobby server 3.

The device information D2 shows a communication address of data server 4.

The game program P is executed by processor 21 so as to thereby implement an authentication process and a game process (described later).

The sending areas R1 and R2 each are storage areas for temporarily retaining information transmitted to or passed over to a game device of another game participant. In this specification, "to transmit" means to physically transmit information to a remote game device, and "to pass over (give)" is to exchange information within the same game device, such as a game device giving information to a virtual game device in the same computer.

The master flag F is a storage area for storing a value of either 1 or 0. In a case in which "1" is written in the master flag F, the game device is a master, while the game device is a slave in a case in which "0" is written in the master flag F.

The game participant table T6 stores information required for the start and the progress of the game (information relating to each game device). The details of the game participant table T6 will be described in the following.

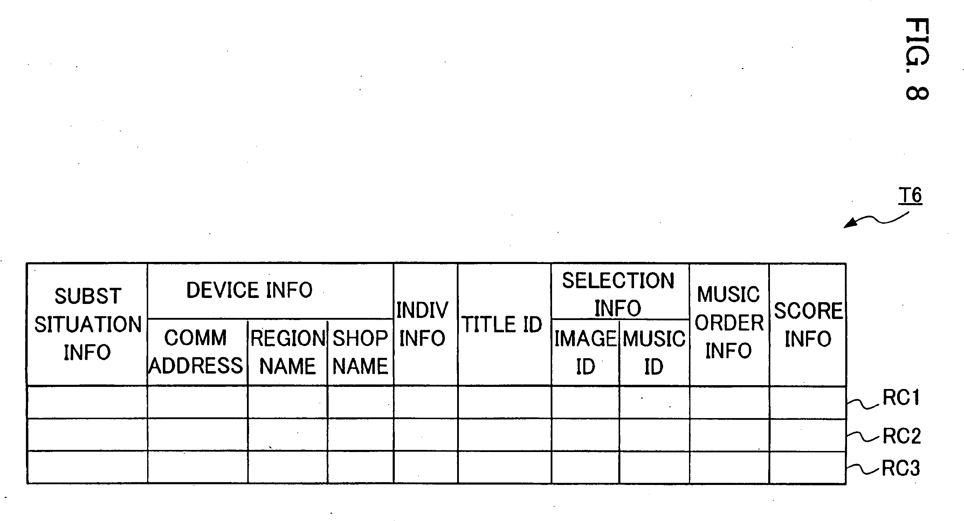

Fig. 8 shows examples of contents of the game participant table T6 stored in the game device of Fig. 7.

The game participant table T6 has three sets of records RC1 to RC3 each corresponding to respective game devices 2 (including this game device itself) currently participating in a game and respective players currently participating in the game. Record RC1 corresponds to game device 2 itself having this particular game participant table T6, and records RC2 and RC3 correspond to other game devices 2 of other game participants, respectively. Stored in each record is game information relating to a corresponding game device 2. Game information is information used in a game, and, specifically, includes substitution situation information, device information, individual information, a title identifier, selection information, music order information, and score information.

The substitution situation information shows a situation of other game devices 2 (game devices corresponding to records other than record RC1) relating to substitution by a virtual game device, and is generated by a game device 2 corresponding to record RC1. One of three situations is shown in the substitution situation information, the situations including "no substitution required," "substitution required," and "substituted." "No substitution required" is a situation the game device in question is able to communicate and participate in a game. "Substitution required" is a situation where the game device in question cannot communicate with other devices. "Substituted" is a situation where the game device in question is being replaced with a virtual game device. Needless to say, since game device 2 itself, corresponding to record RC1, is never replaced by a virtual game device, a situation indicated by substitution situation information in record RC1 should always be "no substitution required."

Device information in the game participant table T6 of this game device is read from storage device 27 of game device 2 corresponding to each record and is given to this game device. Furthermore, the title identifier, selection information (an image identifier and a music identifier) and score information are respectively generated by game device 2 corresponding to each record and are given to this game device. In other words, the above information originates from game device 2 corresponding to each record. On the other hand, individual information in the game participant table T6 is read from storage device 43 of data server 4 and is given to this game device, and it therefore originates from data server 4..

The music order information shows in which order three music pieces used in the game are used, and it is generated by a master of game devices 2 participating in the game and is given to slaves. In other words, the information originates from a master. Therefore, in a case in which a device having the game participant table T6 is a master, the device stores the music order information generated by the game device itself in the game participant table T6. In a case in which a device having the game participant table T6 is a slave, the device stores, in the game participant table T6, music order information given from a master. The three music pieces indicated in the music order information, however, are specified by a master and two slaves, respectively. After three music pieces are decided, the order of the music pieces is decided by a master.

### Operation:

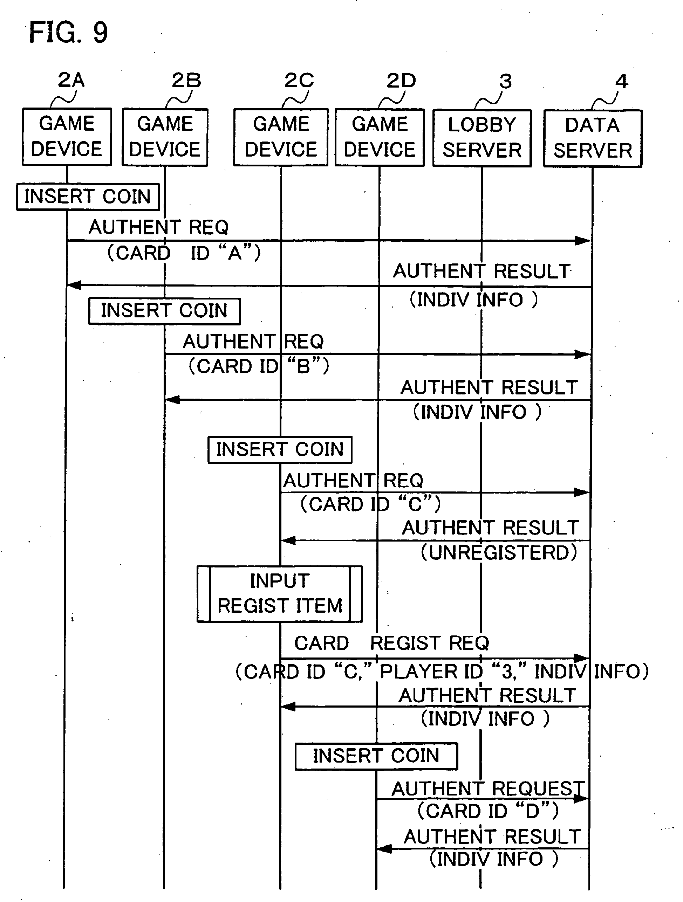

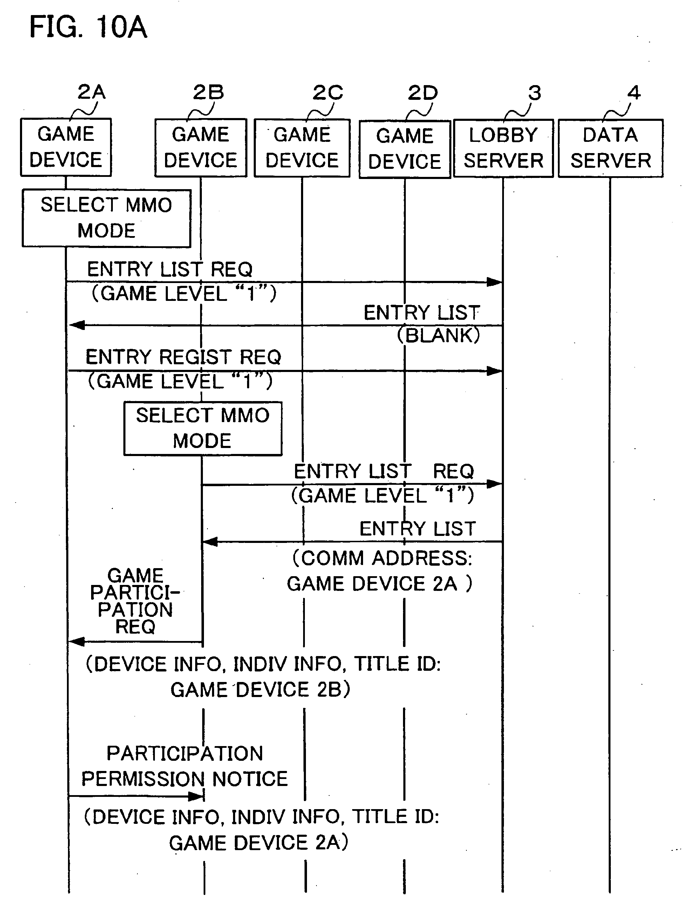

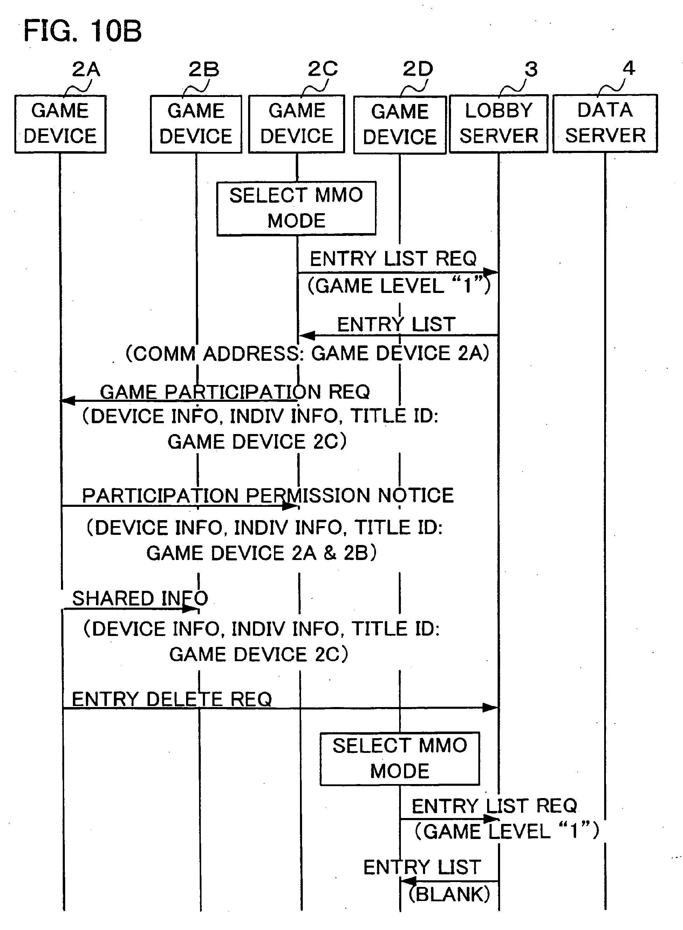

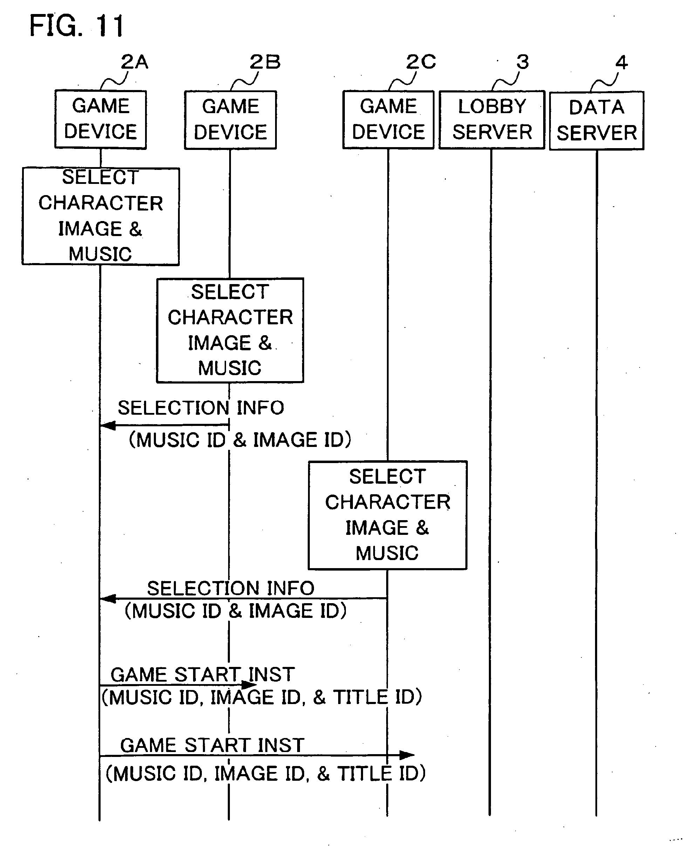

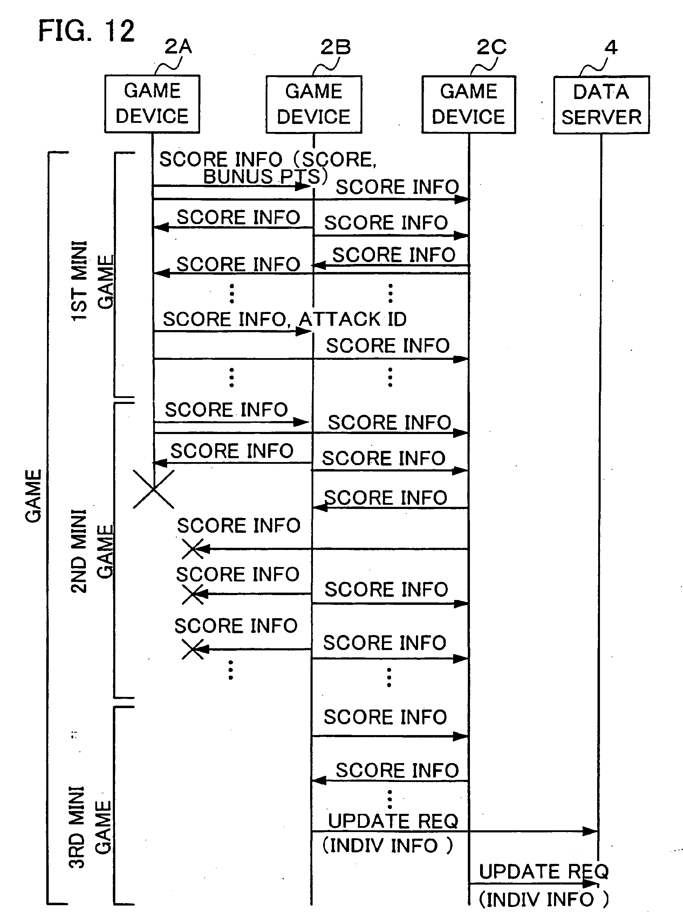

Figs. 9 to 12 are sequence charts showing operational examples in different phases of game system 100. The operation of Fig. 9, the operation of Figs. 10A and 10B, the operation of Fig. 11, and the operation of Fig. 12 are sequentially performed. In the following description, it is assumed that the contents of the individual information table T1 in data server 4 are as shown in Fig. 5. It is also assumed that all player levels of players using game devices 2A to 2D fall within the range of 1 to 15.

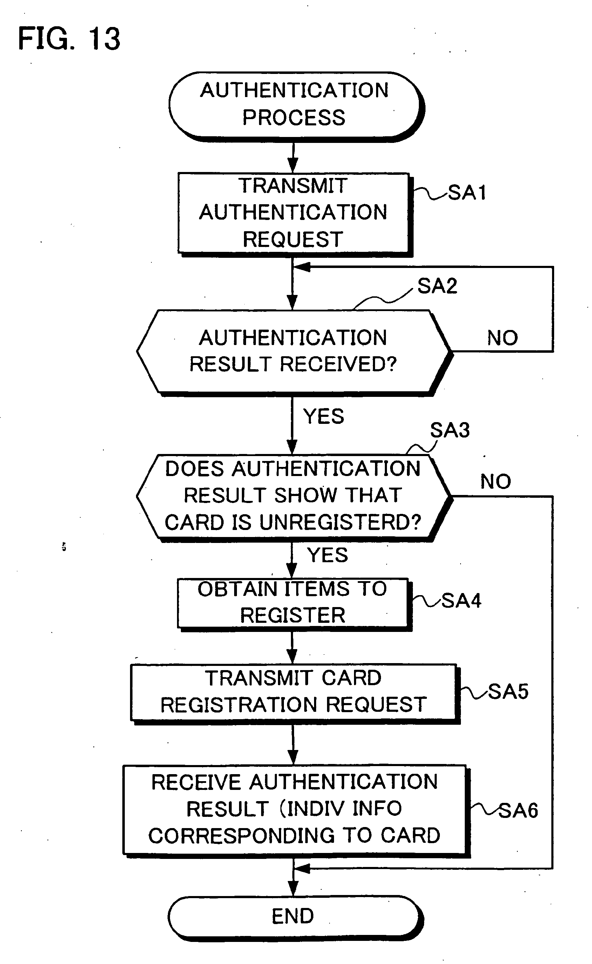

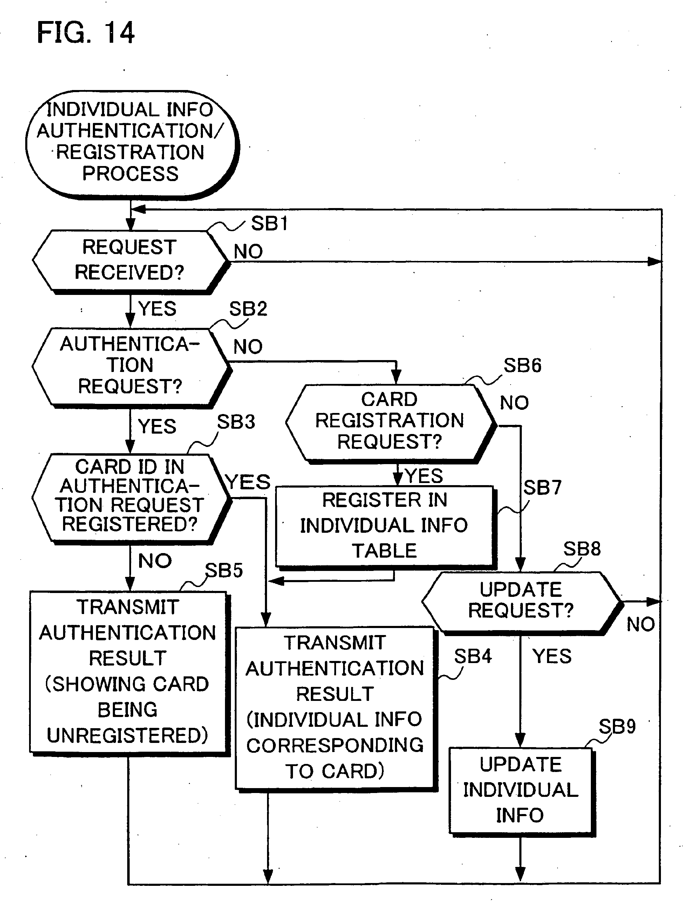

Fig. 9 shows an operation performed by game devices 2A to 2D in which each game device acquires, one after another, individual information corresponding to a player of the game device itself. The operation is performed by processor 21 of each game device 2 executing an authentication process of Fig. 13 and by processor 41 of data server 4 executing an individual information authentication/registration process of Fig. 14. In the following, description will be given of this operation.

In this operation, a card having a card ID "A" is set to game device 2A. In game device 2A, card reading device 26 then reads the card ID from the card to supply the card ID to processor 21. Processor 21, upon receiving the supply of the card ID "A," reads, from storage device 27, destination information D2 and sender information (a communication address of the game device itself), and transmits an authentication request signal containing the sender information and the supplied card ID to data server 4 having a communication address designated by the read destination information D2 (Step SA1 of Fig. 13). A signal transmitted from game device 2 necessarily includes sender information, and therefore, in the following, description will be omitted of transmission of sender information.

On the other hand, processor 41 of data server 4 repeats the determination as to whether to have received a request from one of the game devices (Step SB1 of Fig. 14) until it receives the request. In the repeat process, processor 41 receives from game device 2A an authentication request. Upon receiving a request, a result of the determination of Step SB1 changes to "YES," and processor 21 determines whether the received request is an authentication request (Step SB2). Since the received request is an authentication request from game device 2A, processor 21 then determines whether a card relating to the received request has been registered (Step SB3). Specifically, processor 21 searches in individual information table T1 for the card ID contained in the received request; processor 21 determines that the card is registered in a case in which the number of hit records is equal to or more than one, whereas processor 21 determines that the card is not registered in a case in which the number of hit records is 0.

As shown in Fig. 5, there is stored in the individual information table T1 a record containing the card ID "A" contained in the received authentication request, and therefore, a result of the determination of Step SB3 in this case changes to "YES." As a result, processor 41 reads, from the individual information table T1, individual information associated with this card ID, and replies to game device 2A with an authentication result containing the read individual information (Step SB4). "To reply" means to transmit information or a signal to a device having a communication address designated by the sender information contained in the received request. Subsequently, the process of data server 4 returns to Step SB1.

Processor 21 of game device 2A, after transmitting the authentication request, repeats a determination (Step SA2 of Fig. 13) as to whether it has received an authentication result until it receives an authentication result. In this repeat process, processor 21 receives an authentication result from data server 4. When the authentication result is received, a result of the determination of Step SA2 changes to "YES." Processor 21 then determines whether the received authentication result shows that the card is unregistered (Step SA3). Since information contained in the authentication result received by processor 21 is individual information and is not information indicating that the card is unregistered, a result of the determination of Step SA3 changes to "NO," and the authentication process ends.

Subsequently, processors 21 of game devices 2B to 2D perform the above authentication process one after another, and obtains individual information associated with one of the card IDs "B" to "D."

As shown in Fig. 5, however, the card ID "C" set in game device 2C is not registered, whereas the card ID "A" for game device 2A, the card ID "B" for game device 2B, and the card ID "D" for the game device 2D are registered in data server 4. Therefore, game server 4, when it receives an authentication request from game device 2C, determines that a card, with respect to this authentication result, is unregistered, and replies to game device 2C with an authentication result containing information indicating that the card is unregistered (Steps SB1 to SB3, and Step SB5). Subsequently, the process at data server 4 returns to Step SB1.

On the other hand, processor 21 of game device 2C, when it receives an authentication result from data server 4 after transmitting the authentication request, obtains from a user of game device information the items to be registered at data server 4 (Steps SA1 to SA4). The information items to be registered are broadly divided into three items. The first item is a card ID "C," and has already been supplied from card reading device 26. The second item is a player ID, "3," of a player (user) carrying a card whose card ID is "C." The third item is individual information of this player. Any arbitrary method may be used for obtaining the second and the third information items, from among which game device 2 uses the following method. Processor 21 first causes display device 24 to display an image prompting the user to input information, and a user, in response to what is displayed, operates input device 23, so that input signals indicating a player ID and player's individual information are supplied from input device 23 to processor 21. Processor 21 obtains, using the input signals, the second and the third information items. Processor 21 then transmits to data server 4 a card registration request containing the obtained information items (Step SA5).

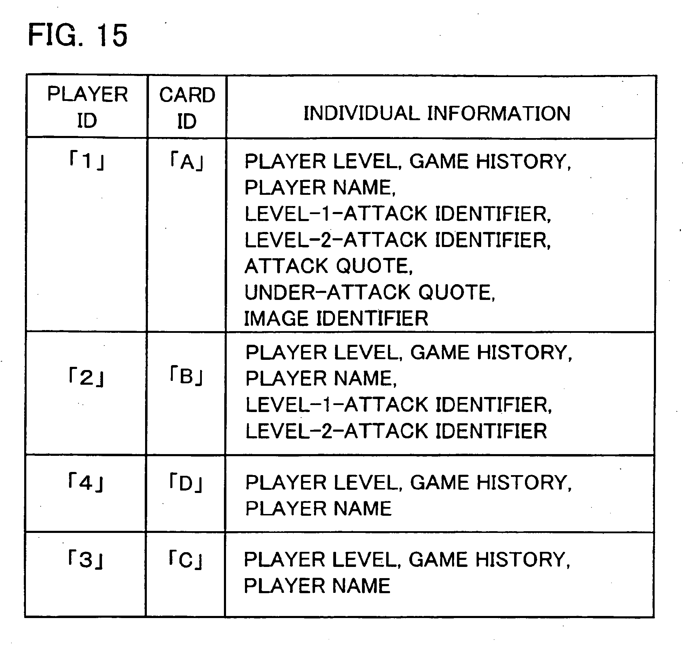

The card registration request is received by processor 41 of data server 4. At data server 4, a result of the determination of Step SB1 of Fig. 14 then changes to "YES," and a result of the determination of Step SB2 changes to "NO." Processor 41 then determines whether the received request is a card registration request (Step SB6). Since the result of the determination of Step SB6 changes to "YES," processor 41 registers a card relating to the received request (Step SB7). Specifically, processor 41 stores, in the individual information table T1, the three information items contained in the received request in association with one another. As a result, the contents of the individual information table T1 shown in Fig. 5 are updated to the contents shown in Fig. 15.

Processor 41 then reads, from the individual information table T1, individual information associated with the card ID "C" contained in the received request, and replies to game device 2C with an authentication request including the individual information (Step SB4). The authentication result is received by processor 21 of game device 2C (Step SA6). Subsequently, the process at data server 4 returns to Step SB1, and the authentication process is then completed at game device 2C.

At game device 2, after the authentication process is finished, a screen is displayed on display device 24, and the screen prompts for selection of one of a plurality of game modes. The plurality of game modes includes a multiplayer participation mode (MMO mode) for performing a multiplayer online game, and when the multiplayer participation mode is selected, processor 21 of each game device 2 starts a game process (described later).

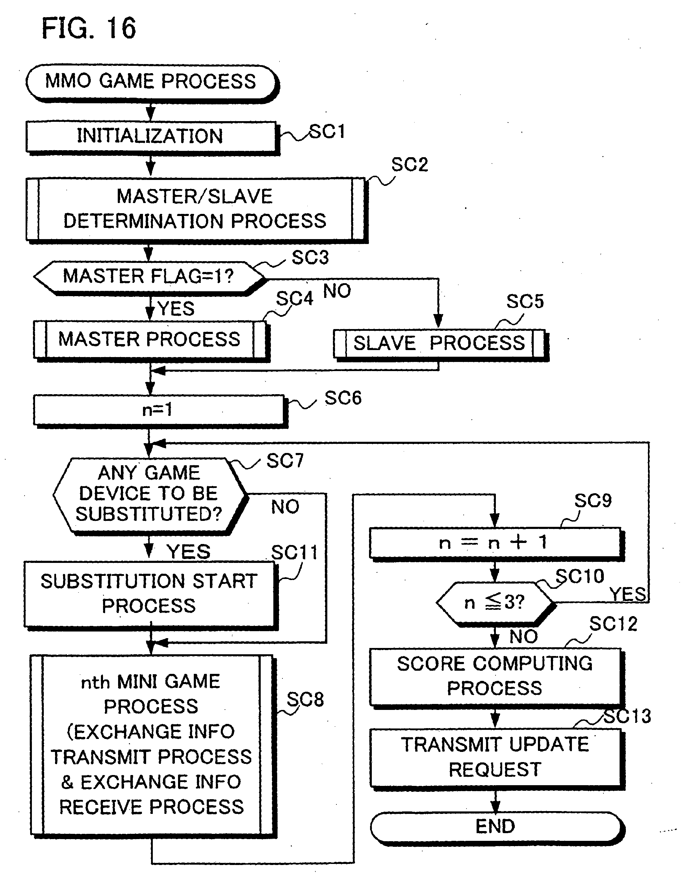

Figs. 10A and 10B show an operation since the multiplayer participation mode is selected at game device 2A until the grouping is finished of participant players (game devices 2) playing the game. The operation is enabled by processor 21 of each game device 2 executing the process of a multiplayer participation game process (MMO game process) shown in Fig. 16, and by processor 31 of lobby server 3 executing the lobby server process of Fig. 18.

In Fig. 10A, a multiplayer participation mode is first selected at game device 2A. The multiplayer participation game process of Fig. 16 is then started. Processor 21 of game device 2 first executes an initialization (Step SC1). In the initialization of Step SC1, processor 21 of game device 2A writes a participation-rejection-receiving-history list (described later) that is empty and reserves a game participant table T6 in storage device 27 of game device 2A, and stores substitution situation information indicating "substitution required" in each of records RC2 and RC3, of the reserved game participant table T6. Furthermore, in the initialization of Step SC1, processor 21 of game device 2 stores, in record RC1 for the player of itself, device information of the game device itself stored in this storage device 27 and individual information of the player itself contained in the authentication result received from data server 4. Furthermore, in the initialization of Step SC1, processor 21 of game device 2 identifies, using the title table T3, a title identifier corresponding to a player level contained in the individual information, for storage in record RC1.

The participation-rejection-receiving-history list has significance when a game device is a slave. As described later, a slave having transmitted a game-participation request to a master sometimes receives a participation rejection notice from the master. The slave having received the participation rejection notice writes, in the participation-rejection-receiving-history list, an identifier (for example, a communication address) of the master that has transmitted the participation rejection notice. The slave no longer transmits a game participation request to a master indicated by the participation-rejection-receiving-history list, and therefore, it is possible to avoid useless transmission of a game participation request. In the initialization phase, the participation-rejection-receiving-history list is empty at all game devices 2.

Substitution situation information shows, as described above, whether another game device 2 (a game device corresponding to a record other than record RC1 of Fig. 8) is being replaced, requires substitution, or requires no substitution by a virtual game device. Since communication could be disabled before the game starts, or another game participant might not appear, in the initialization phase, substitution situation information indicating "substitution required" is stored in records RC2 and RC3 corresponding to other players.

Processor 21 then performs a master/slave determination process (Step SC2). The master/slave determination process is a process of determining whether the game device itself is a master or a slave, and more specifically, a process of determining a value of master flag F.

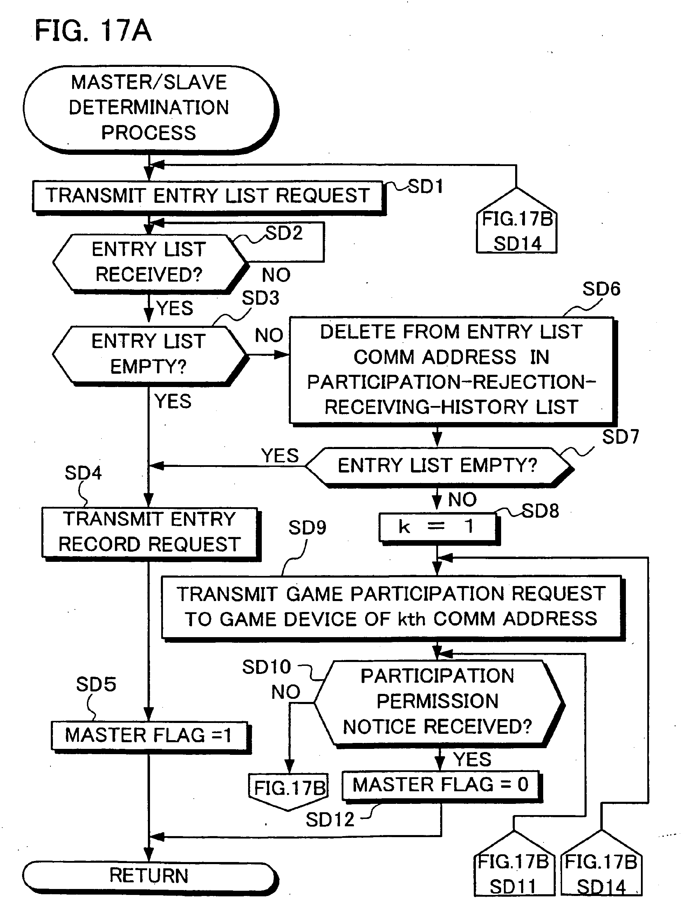

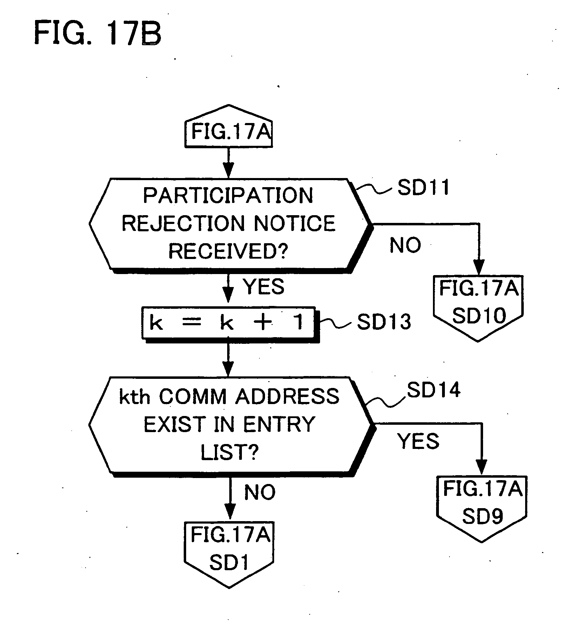

Figs. 17A and 17B are flow charts showing the master/slave determination process.

Processor 21 transmits, to lobby server 3, an entry list request containing information indicating a game level (Step SD1). The entry list request requests lobby server 3 to reply with an entry list stored in storage device 33 of lobby server 3. The entry list request includes information indicating a game level of a player who desires to participate in the game. Specifically, processor 21 reads destination information D1 indicating a communication address of lobby server 3 from storage device 27, converts a player level identified in Step SC1 of Fig. 16 for a player currently operating this game device, to a game level by referring to the level conversion table T4, and transmits an entry list request containing the game level to lobby server 3 having the communication address indicated by the read destination information D1. Since the player level of a player who uses game device 2A is within the rage of 1 to 15, the game level is determined as "1."

Fig. 18 is a flow chart showing a process of lobby server 3, the process enabling the grouping of participants. The flow chart shows a flow for participants of the same game level, and lobby server 3 executes, in parallel with the flow shown, a process for participants of another game level. Processor 31 of lobby server 3 repeats a determination as to whether it has received a request from a game device (Step SE1 of Fig. 18), until it receives a request. When receiving a request from game device 2A in a repeat process, processor 31 determines whether the received request is an entry list request (Step SE2). In a case in which the entry list request is received, and when the game level contained therein is "1," entry list L1 is transmitted as a response, and when the game level contained in the entry list request is "2," entry list L2 is transmitted as a response. Each entry list can have one or more communication addresses of one or more master game devices written therein, the one or more master game device currently accepting game participation requests for respective game levels. In the initial situation, however, nothing has been written in each entry list (i.e., each entry list is empty). As for an entry list request from game device 2A, it is determined to be "YES" in Step SE2, and therefore, processor 31 reads, from storage device 33, entry list L1 corresponding to a game level indicated in the entry list request, to transmit the entry list L1 as a response (Step SE3). Subsequently, a process at lobby server 3 returns to Step SE1.

Processor 21 of game device 2A repeats, after transmitting the entry list request, a determination (Step SD2 of Fig. 17A) as to whether it has received an entry list, until it receives an entry list. In the repeat process, processor 21 of game device 2A, when it receives an entry list from lobby server 3, determines whether the received entry list is empty (Step SD3). In the case of game device 2A, it is determined to be "YES" in Step SD3. Processor 21, upon receiving an empty entry list, transmits to lobby server 3 an entry record request containing information indicating the above game level corresponding to a player who uses the game device itself and a communication address of the game device itself (Step SD4). The entry record request requests lobby server 3 to write an address of a sender game device in an entry list corresponding to a game level specified in the entry record request, from among entry lists stored in storage devices 33 of lobby server 3. Processor 21 then writes "1" in master flag F (Step SD5). That is, the first game device having transmitted an entry list request acts as a master from then on. The master/slave determination process is thus finished for game device 2A.

The transmitted entry record request is received by processor 31 of lobby server 3. As a result, it is determined to be "NO" in Step SE2 of Fig. 18. Processor 31 then determines whether the received information is an entry registration request (Step SE4). Since it is determined to be "YES" in this step, processor 31 uses sender information contained in the received entry record request, to identify a communication address of game device 2A, and records the identified communication address in entry list L1 corresponding to a game level indicated by the received entry record request (Step SE5). Specifically, processor 31 updates entry list L1 so as to contain the sender information (a communication address of a game device) contained in the received entry record request. Subsequently, the process at lobby server 3 returns to Step SE1.

On the other hand, processor 21 of game device 2A determines whether master flag F has a value of "1" (Step Sc3), game device 2A having finished the master/slave determination process (Step SC2 of Fig. 16) and having become the first game device that has transmitted an entry list request, to act as a master. Since the determination result changes to "YES," processor 21 recognizes itself as a master and performs master processes (Step SC4).

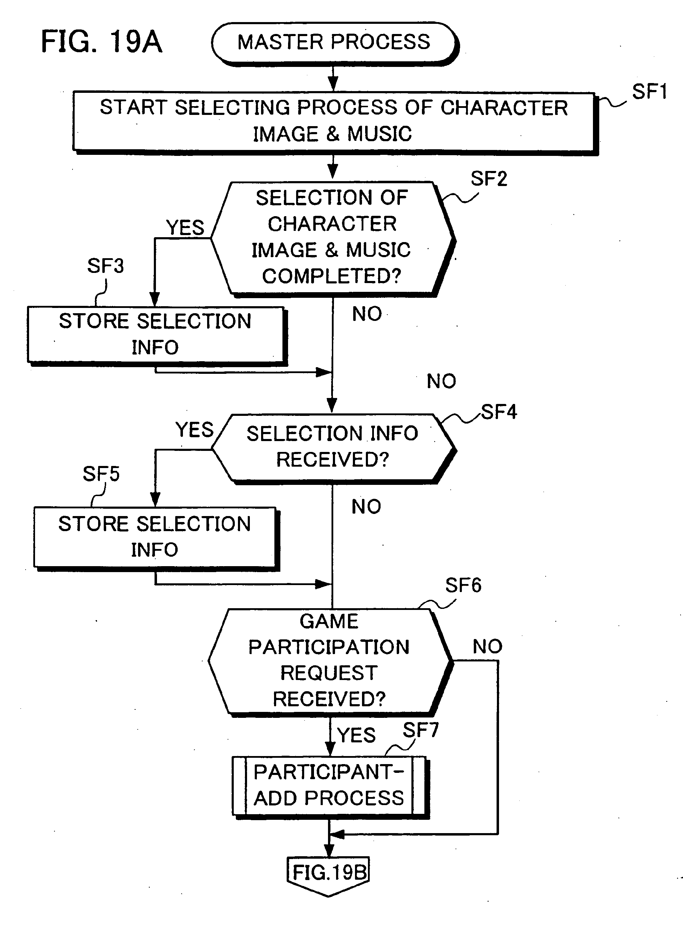

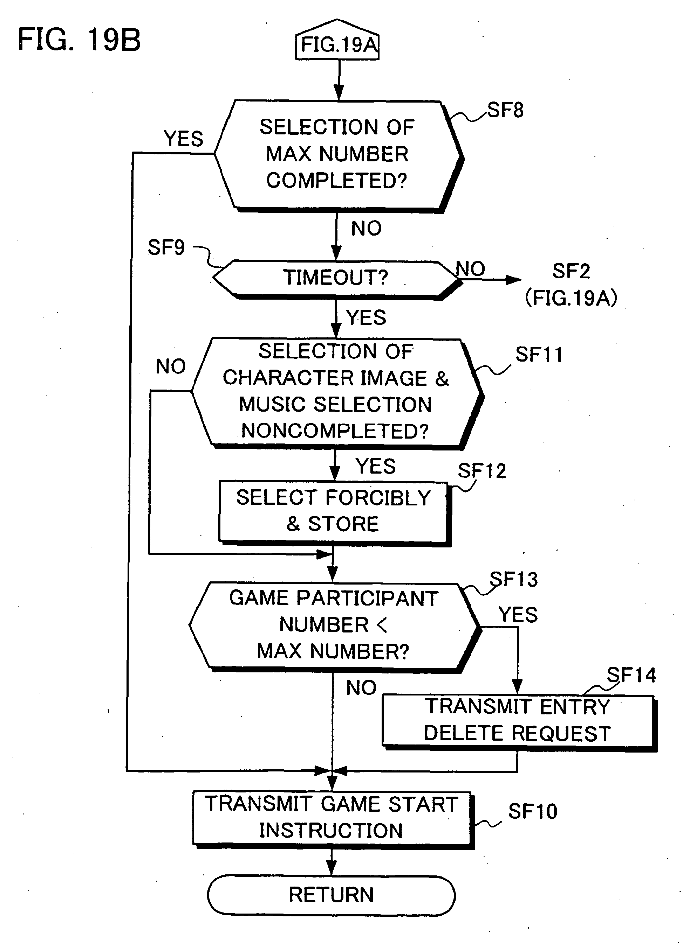

Figs. 19A and 19B are flow charts showing the master processes. The main processes of the master processes includes a process of waiting for a game participation request from another game device, and upon receiving a game participation request, replying with a response permitting the game participation until the number of participants reaches the predetermined maximum number m (which is "3" in the present embodiment), a process of storing in the game participant table T6 data such as communication addresses of the two or more other game devices (slaves), and a process of transmitting, to one of the two or more other game devices, data such as a communication address of the other participant device. Detailed explanation thereof will be given below.

Processor 21 causes a timer to start, and the timer runs out when 60 seconds have elapsed from the start, and it starts a process of selecting a character image and a music piece (Step SF1). In each of game devices 2A to 2C, a player selects a character image and a music piece used by the player (Fig. 11). In the character image and music selection process, processor 21 prompts a player to make a selection. First, processor 21 provisionally selects one from candidates for character images and one from candidates for music pieces. Processor 21, until the player determinately selects a character image and a music piece, switches the provisionally selected character image and music piece to those which are based on the image table T2, the music table T5, and input device 23. With input signals from input device 23 indicating the selection of a character image and a music piece, processor 21 determinately selects a character image and a music piece. In the selection process, the provisionally selected character image and a title of the provisionally selected music piece are displayed on display device 24, and music sound signals of the provisionally selected music piece are generated and supplied to speaker 25. The provisional selection immediately after the start of the character-image-and-music-selection process is performed basically at random; however, in a case in which individual information stored in record RC1 of the game participation table T6 contains information indicating an image identifier, a character image corresponding to the image identifier is provisionally selected in the first place. The character-image-and-music-selection process is performed in parallel with Steps SF2 to SF9 to be described later, and the process is terminated when a result of the determination of Step SF8 or SF9 changes to "YES."

In Steps SF2 to SF9, processor 21 repeats the following processes sequentially until a result of the determination of Step SF8 or SF9 changes to "YES."
(1) Processor 21 determines whether a player of the game device itself has finished selecting a character image and a music piece (Step SF2), and only when it is determined that the selection is finished, stores, in record RC1 of the game participation table T6, selection information showing selection results (an image identifier and a music identifier) (Step SF3).
(2) Processor 21 determines whether it has received selection information from another game device (slave) (Step SF4), and only when it is determined to be "YES," stores selection information showing selection results (an image identifier and a music identifier) to record RC2 or RC3 of the game participant table T6 (Step SF5). It is determined, based on sender information contained in the received selection information, whether the selection information is to be stored in record RC2 or RC3.
(3) Processor 21 determines whether it has received a game participation request from a slave (Step SF6), and only when it is determined to be "YES," performs a participant-add process (described later) (Step SF7). The participant-add process is a process that permits or rejects a slave having transmitted a game participation request to become a participant.
(4) Processor 21 determines whether the selection of a character image and a music piece is finished for the maximum number of participants (which is "3" in the embodiment) (Step SF8).
(5) Processor 21 determines whether the timer has run out (Step SF9).

It is assumed that, as shown in Fig. 10A, a multiplayer participation mode is selected at game device 2B while the repeat process of the above (1) to (5) of the master process (Figs. 19A and 19B) are performed at game device 2A. In this case, processor 21 of game device 2B, in the same way as processor 21 of game device 2A has done, starts the multiplayer participation game process shown in Fig. 16 to execute the above initialization (Step SC1). A game participant table T6 of game device 2B, however, is reserved in storage device 27 of game device 2B, and in a record RC1 thereof, device information of game device 2B itself and individual information (individual information associated with the card "B") of a player of game device 2B are stored, the individual information being contained in an authentication result received from data server 4 by processor 21 of game device 2B.

Subsequently, in the master/slave determination process (Step SC2), processor 21 of game device 2B transmits, as shown in Fig. 17A, an entry list request (Step SD1). As shown in Fig. 10A, a game level "1" is specified in the entry list request. Provided that the maximum number of players allowed to participate in one game is 3, game device 2B being the second to transmit an entry list request for the same game level should act as a slave. Since the entry list L1 transmitted from lobby server 3 to game device 2B contains information showing a communication address of game device 2A (a candidate for a master), a result of the determination in Step SD3 of Fig. 17A changes to "NO."

As a result, the master/slave determination process of Fig. 17A proceeds to Step SD6, in which processor 21 of game device 2B deletes, from the received entry list L1, information that agrees with information in the participation-rejection-receiving-history list. In this instance, which is immediately after game device 2B has received an entry list for the first time, game device 2B being the second to transmit an entry list request, the participation-rejection-receiving-history list should be empty, and therefore, the received entry list L1 is not changed, so that information indicating the communication address of game device 2A remains contained in the entry list. Processor 21 then determines whether the entry list L1 after the deletion is empty (Step SD7). Since it is determined to be "NO" in the determination, a variable k is set to "1" (Step SD8). The variable k is a sequence order number of communication addresses of masters in the entry list. In a case in which there is a communication address of only one master in the entry list, the maximum value of the variable *k* is "1". In a case in which there are communication addresses of two masters in the entry list, there is a communication address for *k*=1 and there is a communication address for *k*=2. In Step SD8, processor 21 of game device 2B refers to information of interest corresponding to *k*=1 in the entry list L1, and it transmits a game participation request to a game device (game device 2A as a candidate for a master) having a communication address indicated by the information of interest (Step SD9). The game participation request contains device information, individual information, and a title identifier of a sender which is a game device 2B that is to act as a slave. Processor 21, upon transmitting the game participation request, repeats a determination as to whether a participation-permission notice is received (Step SD10) and a determination as to whether a participation-rejection notice is received (Step SD11; Fig. 17B) until it receives a participation-permission notice or a participation-rejection notice.

The game participation request from game device 2B is received by processor 21 of game device 2A. As a result, it is determined to be "YES" in the determination of Step SF6 of (3) in the above-mentioned master process (Fig. 19A). Processor 21 of game device 2A then performs a participant-add process (Step SF7).

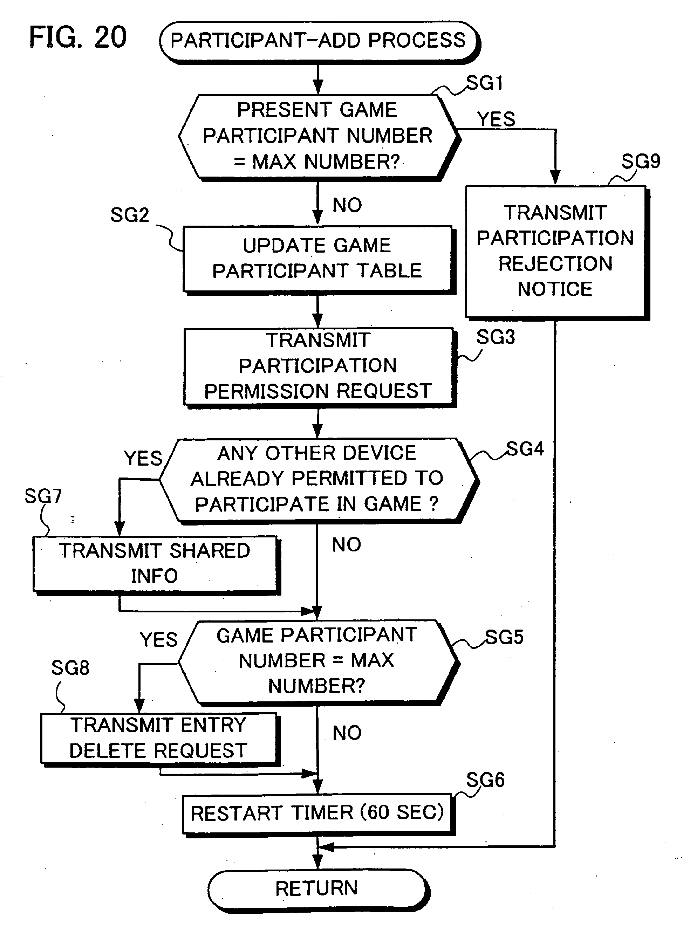

Fig. 20 is a flow chart showing the participant-add process. The participant-add process is a process that permits or rejects a slave having transmitted a game participation request to become a participant.

In the participant-add process, it is first determined whether the number of game participants exceeds the maximum number m after a sender game device 2 of the received game participation request is added as a game participant (Step SG1). That is, it is determined whether the current number of game participants is already equal to the maximum number *m*. For the game device 2B being the first to transmit a game participation request, it is determined to be "NO" in the determination, and therefore, processor 21 of game device 2A updates the game participation table T6 using the received game participant request (Step SG2). Specifically, the device information, the individual information, the title identifier, and the substitution situation information that indicates "no substitution required" are stored in record RC2 or RC3 in the game participant table T6. In a case in which it is the first time to receive a game participation request, i.e., for game device 2B, record RC2 is used as the storage.

Subsequently, processor 21 of game device 2A replies to a game device 2 that is a sender of the game participation request, with a participation-permission notice for permitting the game participation, thereby permitting the game participation, and increments the number of the game participants *m* by 1 to put the total at 2 (Step SG3). The participation-permission notice contains device information, individual information, and a title identifier of a game device 2A being a master. Processor 21 then determines whether there is another game device 2 whose participation in the game has already been permitted (Step SG4). This determination is performed by checking whether the game participant table T6 contains game information of a game device 2, other than for the game device itself, and another game device whose game participation is permitted immediately before. In a case in which a result of the determination changes to "NO," processor 21 determines whether the number of game participants *m* is already equal to the maximum number (Step SG5). In a case in which game device 2B transmits a participation request, it is determined to be "NO" in Step SG5. Therefore, processor 21 restarts the timer (Step SG6). As a result, the time running out in the timer is deferred to a time when 60 seconds have elapsed from the restart. Thus, in a case in which a slave is allowed to be a participant, the timer, which was started in Step SF1, is restarted. Therefore, the time running out in the timer is deferred to a time when 60 seconds have elapsed after the restart. The timer is restarted to prevent the transmission of a game-start instruction, before the selection is finished, of a character image and a music piece by a game device that has just become a new participant (refer to Steps SF9 and SF10 of Fig. 19B to be discussed later). The participant-add process of adding game device 2B as a new participant is thus finished.

The participation-permission notice from game device 2A that is a master is received by processor 21 of game device 2B. As a result, in game device 2B, it is determined to be "YES" in the determination of Step SD10 of the master/slave determination process of Fig. 17A. The process then proceeds to Step SD12, and processor 21 of game device 2B writes "0" in the master flag F, and updates the game participant table T6 using the received participation-permission notice (step SD12). In the update, device information, individual information, and a title identifier contained in the received participation-permission notice, and the substitution situation information "no substitution required", are stored in record RC2, which is empty in the game participant table T6. Thus, the master/slave determination process at game device 2B is finished.

In the master/slave determination process in game device 2B, a value of the master flag F is set to "0", and it is then determined to be "NO" in the determination of Step SC3 of Fig. 16. As a result, processor 21 of game device 2B recognizes the game device itself as being a slave while it recognizes game device 2A that is a sender of the participation-permission notice as being a master, and performs a slave process (Step SC5).

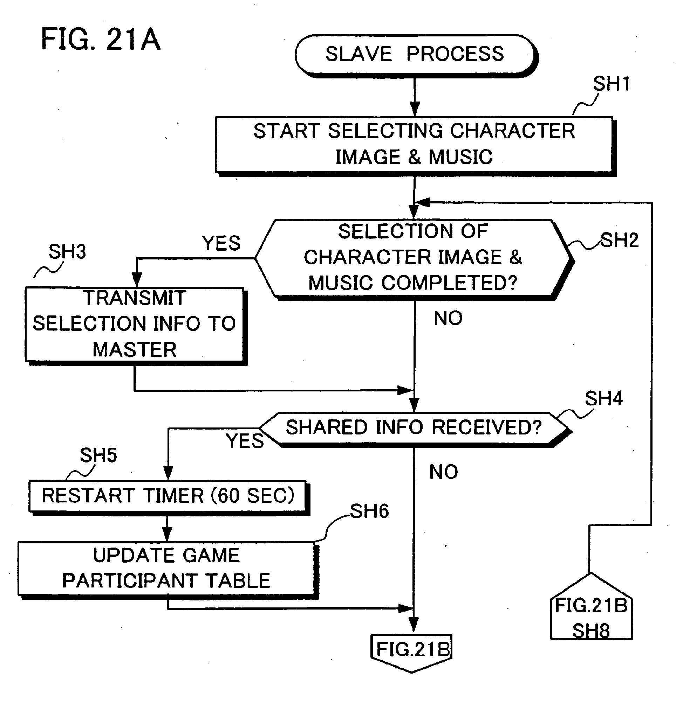

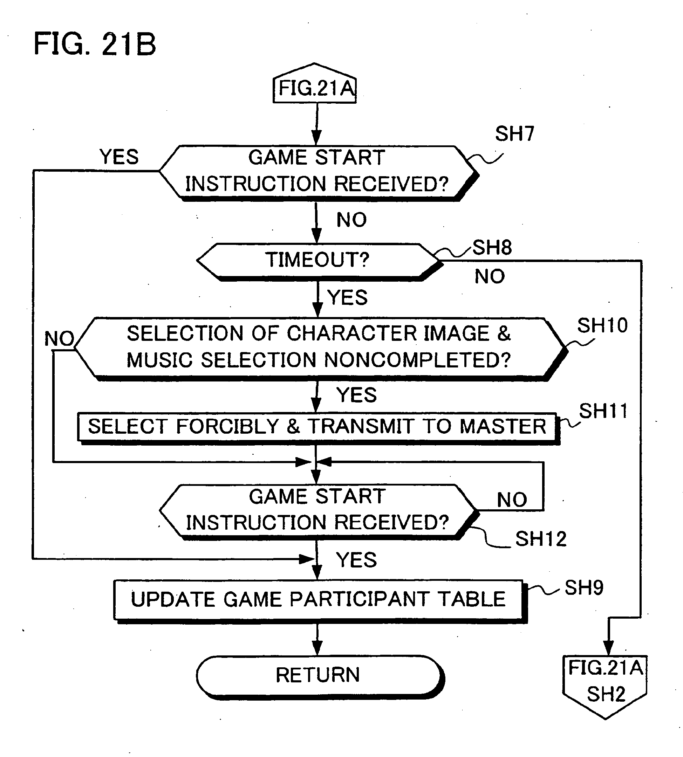

Figs. 21A and 21B are flow charts showing the slave process. The main process of the slave process includes a process of selecting a character image and music piece. Details will be given below.

Processor 21 starts a timer that runs out when 60 seconds have elapsed from the start, and this starts a character-image-and-music-selection process (Step SH1). As described previously, in each of the game devices 2A to 2C, a player selects a character image the player will use and selects one music piece (Fig. 11). In the character-image-and-music-selection process, processor 21 causes an image prompting for user selection of a character image and a music piece to be displayed on display device 24 of game device 2, while waiting for supply of input signals from input device 23, the input signals indicating that a character image and a music piece have been selected determinately. The selection process is performed in parallel with the processes of Steps SH2 to SH8, and is terminated when a result of the determination of Step SH7 or SH8 changes to "YES."

In the processes of Steps SH2 to SH8, processor 21 repeats the processes listed below in sequence until a result of the determination of Step SH7 or SH8 changes to "YES."
(A) Processor 21 determines whether the selection of a character image and a music piece has been completed by the player (Step SH2), and only when it is determined that the selection has been completed, transmits selection information indicating selection results (an image identifier and a music identifier) to the master (Step SH3).
(B) Processor 21 determines whether it has received shared information from another game device (master) (Step SH4), and only when the determination changes to "YES," restarts the timer (Step SH5) and updates the game participation table T6 (Step SH6). In the updating process, processor 21 stores, in record RC3 of the game participant table T6, device information, individual information, and a title identifier contained in the received shared information, and substitution situation information that indicates "no substitution required."
(C) Processor 21 determines whether it has received a game-start instruction from another game device (master) (Step SH7).
(D) Processor 21 determines whether the timer has expired (Step SH8).

It is assumed that, as shown in Fig. 10B, a multiplayer participation mode is selected at a game device 2C, while the aforementioned repeated processes (1) to (5) of the master process (Figs. 19A and 19B) are performed at game device 2A, and the above-mentioned repeated processes (A) to (D) of the slave process (Figs. 21A and 21B) is performed at game device 2B. In this case, processor 21 of game device 2C, in the same way as for processor 21 of game device 2B, starts the multiplayer participation game process shown in Fig. 16 to execute the above initialization (Step SC1). A game participant table T6 for game device 2C is reserved in storage device 27 of game device 2C, and in record RC1 of the game participant table T6, device information of the game device 2C itself and individual information (individual information associated with the card ID "C") of a player of game device 2C, the individual information being contained in the authentication result received from data server 4 by processor 21 of game device 2C.

Subsequently, in the master/slave determination process (Step SC2), processor 21 of game device 2C transmits an entry list request as shown in Fig. 17A (Step SD1). As shown in Fig. 10B, the game level "1" is designated also in this entry list request. Since the maximum number allowed to participate in one game is 3, game device 2C being the third to transmit an entry list request for the same game level is to act as a slave. In the master/slave determination process (Figs. 17A and 17B), processor 21 of game device 2C performs the same steps in the same way as for processor 21 of game device 2B, to transmit a game participation request to game device 2A which is a candidate for a master (Step SD9). The game participation request transmitted from game device 2C to game device 2A contains device information, individual information, and a title identifier of game device 2C.

The game participation request from game device 2C is received by processor 21 of game device 2A. The participant-add process (Fig. 20) performed by processor 21 this time is the same as the process performed by the same processor 21 upon receiving the game participation request from game device 2B, except that it is record RC3 in which information will be stored in Step SG2 of Fig. 20. As a result, when the process of Step SG2 is finished, records RC1 to RC3 of the game participant table T6 of game device 2A are filled out. A participation-permission notice returned in Step SG3 contains device information, individual information, and a title identifier of game device 2A and device information, individual information, and a title identifier of game device 2B. Therefore, when the process of Step SD12 of Fig. 17A is completed, records RC1 to RC3 in the game participant table T6 of game device 2C are filled out, and from then on, processor 21 of game device 2C recognizes itself to act as a slave.

In the master game device 2A, since it has already given permission to participate in the game to another slave game device 2B, it is determined to be "YES" in the determination of Step SG4 of the participant-add process (Fig. 20). Therefore, processor 21 of game device 2A transmits shared information to game device 2B to which game device 2A has given permission to participate in the game (Step SG7). The shared information includes device information, individual information, and a title identifier of game device 2C, which has last been given permission.

The shared information from game device 2A is received by processor 21 of game device 2B. As a result, it is determined to be "YES" in Step SH4 of the aforementioned (B) of the slave process (Fig. 21A). Processor 21, therefore, restarts the timer (Step SH5), and updates the game participant table T6 (Step SH6). In the update, the device information, the individual information, and the title identifier contained in the received shared information, and substitution situation information indicating "no substitution required" are stored in blank record RC3 of the game participant table T6. Records RC1 to RC3 of the game participant table T6 of game device 2C are thus filled out. Subsequently, the process at game device 2C proceeds to Step SH7.

On the other hand, processor 21 of game device 2A, after it transmits the shared information, determines whether the number of game participants has reached the maximum number (Step SG5 of Fig. 20). Since the number of game participants turned 3 in Step SG2, the determination changes to "YES." Processor 21, therefore, transmits to lobby server 3 an entry deletion request containing information indicating the game level (Step SG8). Subsequently, the process at game device 2A proceeds to Step SG6. The entry deletion request requests lobby server 3 to delete, from an entry list that corresponds to the game level indicated in the entry deletion request, a communication address of a game device having transmitted the entry deletion request.

The entry deletion request from game device 2A is received by processor 31 of lobby server 3. Since the request received by processor 31 is neither an entry list request nor an entry record request, it is determined to be "NO" in the determinations of Steps SE2 and SE4 of Fig. 18. Processor 31, therefore, determines whether the received request is an entry deletion request (Step SE6). In this case, the result of the determination changes to "YES." Processor 31, therefore, deletes, from the entry list L1 corresponding to the game level indicated by the received entry deletion request, information that agrees with sender information contained in the request (Step SE7). In other words, the entry list L1 of storage device 33 is updated so as not to contain information showing the communication address of game device 2A. As a result, the number of communication addresses of masters recorded in the entry list L1 is decreased by one, and the entry list L1 becomes empty. The participant grouping is thus finished, and game devices 2A to 2C are grouped to play one game. Subsequently, the process at lobby server 3 returns to Step SE1.

It is assumed, as shown in Fig. 10B, that a multiplayer participation mode is subsequently selected at game device 2D. Since the communication address of game device 2A is deleted from the entry list L1 at the end of the immediately previous grouping of participants, the entry list L1 of lobby server 3 is empty at this time. Game device 2D, which is the fourth to transmit an entry list request, receives an empty entry list L1 from lobby server 3. Game device 2D having received the empty entry list transmits an entry record request specifying the game level "1" to lobby server 3. Game device 2D, from then on, operates as a master in the same way as game device 2A does, and waits for game participation requests from game devices to become slaves. In Figs. 10A and 10B, an information flow with respect to participants under the game level L1 is only shown, and lobby server 3 uses the entry list L1 for dealing with participants under the game level L1. Though not shown, lobby server 3 uses the entry list L2 to deal with participants under the game level 2 in the same way.

As in the foregoing, game device 2D, which is the fourth to transmit an entry list request for the same game level, becomes a master, and two game devices that are the fifth and the sixth to transmit entry list requests for the same game level become slaves. In the same way, game devices that are the seventh, the tenth, the thirteenth, ..., to transmit entry list requests become masters, and other game devices having transmitted entry list requests become slaves. That is, a game device becomes a master when *i* mod *m* = *j* = 1, i.e., the remainder *j* is 1 when *i* is divided by *m*; and a game device becomes a slave when *j*=2 or 0, where *i* is the order of participation in the same game level (the order of transmitting an entry list request) and *m* is the maximum number of participants allowed to participate in one game.

However, due to factors such as communication delay or concentration of players interested in participating in a game during a short period of time, an entry list request from the fourth game device 2D could be received by lobby server 3 before an entry deletion request from game device 2A, and consequently, the entry list L1 containing information indicating the communication address of game device 2A could be transmitted from lobby server 3 to game device 2D. In this case, game device 2D temporarily acts as a slave, to transmit a game participation request to game device 2A. In this phase, however, since the number of game participants is equal to the maximum number, it is determined to be "YES" in Step SG1 of Fig. 20 at game device 2A having received the game participation request from game device 2D. Processor 21 of game device 2A, therefore, replies to game device 2D with a participation-rejection notice in response to the game participation request therefrom (Step SG9). Subsequently, the process at game device 2A proceeds to Step SF8 of Fig. 19B.

The participation-rejection notice from game device 2A is received by processor 21 of game device 2D. As a result, it is determined to be "YES" in the determination of Step SD1 of Fig. 17A at game device 2D. Processor 21 of game device 2D, therefore, updates a participation-rejection-receiving-history list so as to contain sender information contained in the participation-rejection notice, to record the communication address of game device 2A in the participation-rejection-receiving-history list. Furthermore, processor 21 of game device 2D increments the variable *k* by 1, to thereby refer to a next communication address of interest (the communication address having *k*=2) in the entry list L1 (Step SD13; Fig. 17B). Processor 21 then determines whether the communication address of interest exists in the entry list L1 (Step SD14; Fig. 17B). In a case in which a result of the determination changes to "YES," the routine returns to Step SD9, to transmit a game participation request to a master other than game device 2A, whereas in a case in which the result of the determination of Step SD14 changes to "NO," the routine returns to Step SD1. That is, processor 21 starts over again from the process of obtaining the entry list L1 from lobby server 3.

In a case in which an entry deletion request has not yet been received by lobby server 3 even after the start over, game device 2D will receive the entry list L1 containing information indicating the communication address of game device 2A. However, since the address of game device 2A is registered in the participation-rejection-receiving-history list, the received entry list L1 will be made empty in Step SD6. The determination result of Step SD7 therefore changes to "YES," and the process proceeds to Step SD4. From then on, game device 2D will act as a master.

Fig. 11 shows an operation performed by game devices 2A to 2C grouped as participants until the devices start a game. In each of game devices 2A to 2C, a player selects a character image the player will use and selects one music piece. At slave game device 2B, an image identifier indicating the selected character image and a music identifier indicating the selected music piece are identified, and transmits, to the master (game device 2A), selection information containing the image identifier and the music identifier. Similarly, slave game device 2C transmits, to the master (game device 2A), selection information containing an image identifier and a music identifier. The master game device 2A, having received selection information from all the slaves, determines the order of music pieces, and transmits to each salve a game-start instruction. The operation of Fig. 11 is executed after processor 21 of each game device 2 has performed the master process of Figs. 19A and 19B or the slave process of Fig. 12.

In Fig. 11, a character image and a music piece are first selected at game device 2A. At game device 2A, a result of the determination of Step SF2 of the master process (Fig. 19A) then changes to "YES," and processor 21, based on an image displayed on display device 24 and input signals supplied from input device 23, identifies an image identifier indicating the selected character image and a music identifier indicating the selected music piece, and stores the selection information containing the image identifier and the music identifier in the game participant table T6 (Step SF3).

Subsequently, in Fig. 11, a character image and a music piece are selected at game device 2B. At game device 2B, a result of the determination of Step SH2 of the slave process (Fig. 21A) then changes to "YES," and processor 21, based on an image displayed on display device 24 and input signals supplied from input device 23, identifies an image identifier indicating the selected character image and a music identifier indicating the selected music piece, and transmits, to the master (game device 2A) selection information containing the image identifier and the music identifier (Step SH3). The selection information is received by processor 21 of game device 2A. Since the timer of the master process (Fig. 19B) has not yet run out (Step SF9), a result of the determination of Step SF4 of (2) changes to "YES," and processor 21 stores the received selection information in record RC2 of the game participant table T6 (Step SF5).

Subsequently, in Fig. 11, a character image and a music piece are selected at game device 2C. At game device 2C, selection information is then transmitted to the master (game device 2A) in the same way as the above game device 2B has done. At game device 2A, however, the selection information from game device 2C is stored in record RC3 of the game participant table T6.

Thus, since, at game device 2A, the selection by participants of the maximum number (3 persons) is completed before the timer runs out, the determination of Step SF8 of (4) changes to "YES" of the master process (Fig. 19B), and the routine exits the repeat process. Processor 21 then associates game device 2B of another game participant with the sending area R1, and game device 2C of the other game participant with the sending area R2, and transmits to each slave (game device 2B and 2C) a game-start instruction notifying the time to start the game, and then the master process is finished (Step SF10). Subsequently, game device 2A starts a game at the time designated by the game-start instruction. The game-start instruction contains information sets corresponding respectively to game devices 2A to 2C. Each information set includes information showing a communication address of the corresponding game device 2, an image identifier of a character image selected at the corresponding game device 2, a music identifier selected at the corresponding game device 2, and a title identifier identified at the corresponding game device 2. Furthermore, the game-start instruction indicates a time at which a game is to be started. That is, processor 21 of the mater executes a process of notifying two or more other game devices of a start time of the game and a process of enabling a player to play a game at the start time.

The game-start instruction from game device 2A (master) is received by processor 21 of a slave. As a result, at game devices 2B and 2C, the determination result of Step SH7 of (C) of the slave process (Fig. 21B) changes to "YES," and the routine comes out of the repeat process of Figs. (A) to (D). Processor 21 of the slave then uses the received game-start instruction to update the game participant table T6 (Step SH9). Specifically, an image identifier, a music identifier, and a title identifier contained in the game-start instruction are stored in a relevant record of the game participant table T6. The slave process is thus completed at a slave, and the game is started. The game-start time at a slave is a period designated by the game-start instruction. In other words, processor 21 of a slave, upon receiving from a master a notice of the start time, executes a program at the start time to perform a process of enabling a player to play a game. As a result, at a plurality of game devices 2A, 2B, and 2C, the start of a game can be synchronized.

Processor 21 of a slave causes a virtual game device to start and replace a missing participant. Substitution situation information for a record corresponding to the missing participant has been unchanged since it was set to "substitution required" in the initialization state (Step SC1 of Fig. 16) (since the participant table T6 is not updated in Step SH6 of Fig. 21A), and therefore, processor 21 causes a virtual game device corresponding to the record to start. An entry period for game devices A1 to A3 is terminated as the game starts. From then on, each game device will communicate with any game device under an equal relationship.

In a case in which the timer runs out during the repeat process of (A) to (D) in the slave process (Figs. 21A and 21B), however, the result of the determination changes to "YES" in Step SH8 of (D), and the routine comes out of the repeat process. Processor 21 of the slave subsequently determines whether the selection of a character image and a music piece is uncompleted (Step SH10). In a case in which the determination result changes to "YES," processor 21 forcibly selects a provisionally selected character image and music piece, stores selection information indicating the selection results in the game participant table T6, and transmits the selection information showing the selected results (an image identifier and a music identifier) to the master (Step SH11). Processor 21 then waits for a receipt of a game-start instruction (Step SH12). In a case in which the determination of Step SH10 changes to "NO," the process proceeds to Step SH12.

The timeout timing of a master's timer is later than that of a slave's timer. This is because every time the master permits a slave to be a participant in the participant-add process (Fig. 20), the master restarts the timer and gives the new participant player a grace period for selecting a character image and a music piece. Processor 21 of the master can, therefore, receive selection information transmitted from a slave after the slave's timer runs out if it is before the master's timer runs out, that is, while performing the repeat process of SF2 to SF9 ((1) to (5)) of Figs. 19A and 19B.

Furthermore, in a case in which the timer runs out in the repeat process of SF2 to SF9 ((1) to (5)) of Figs. 19A and 19B at a master, a determination result of Step SF9 of (5) changes to "YES," and the routine comes out of the repeat process. Processor 21 of the master then determines whether the selection of a character image and a music piece is uncompleted (Step SF11). As described before, at a slave, the selection is forcibly made if the selection of a character image and a music piece is not performed within a prescribed time, and the selection information then will be certainly received by a master before the master's timeout. Therefore, in this determination, it is only necessary to pay attention to whether the selection by a player using the master is uncompleted. The timeout timing may be set for longer than 60 seconds at the time of restarting the timer at the master (Step SF7), considering signal delay in the Internet 1.

In a case in which the determination result of Step SF11 changes to "YES," processor 21 of a master forcibly selects the provisionally-selected character image and music piece, and it stores in the game participant table T6 selection information indicating the selection results (Step SF12). Processor 21 then determines whether the number of game participants is less than the maximum number m (Step SF13). In a case in which the determination result of Step SF11 changes to "NO," the process proceeds to Step SF13. In a case in which the determination result changes to "YES" (i.e., when the number of participants is insufficient), processor 21 transmits the aforementioned entry deletion request to lobby server 3 (Step SF14). Subsequently, the process proceeds to Step SF10, and processor 21, if there is a slave, transmits a game-start instruction to the slave, and causes a virtual game device to start for a missing slave. Substitution situation information for a record corresponding to the missing participant was set to "substitution required" in the initialization phase (Step SC1 of Fig. 16) and has been unchanged (since the participation table T6 is not updated in Step SG2 of Fig. 20), and the master causes a virtual game device corresponding to the record to start.

In a case in which the result of the determination of Step SF13 changes to "NO" (i.e., the number of participants is already equal to the maximum number), the process proceeds to Step SF10. In this case, in Step SF10, processor 21 transmits a game-start instruction to each slave. In a case in which the number of participants is already equal to the maximum number, an entry deletion request has already been transmitted in the participant-add process (Step SF7), that is, in Steps SG5 and SG8 of Fig. 20.

Fig. 12 shows an operation after a multiplayer participation game is started. After the game is started, each of the game devices 2A to 2C transmits its own score information (score and bonus points) regularly to other game devices. Each of the game devices 2A to 2C stores score information of itself and other devices in the game participant table T6 shown in Fig. 8. The score and bonus points thereof are displayed in the lower portion of the game screen shown in Fig. 2, and the scores of other players are displayed in the right portion of the game screen of Fig. 2.

The operation of Fig. 12 is enabled by processors 21 of game devices 2A to 2C each performing the multiplayer participation game process of Fig. 16, and by processor 41 of data server 4 performing the individual information process of Fig. 14. In the operation after the game is started, there is no master/slave relationship between game devices 2, and communication control of each game device 2 is performed individually. In other words, processor 21 of each game device 2 functions as a communication-mode shifter that decides the master/slave relationship and causes a communication mode with two or more other game devices to shift to an individual communication mode, subject to the transmission of a game-start instruction in the master process (Step SF10 of Fig. 19B) or the receipt of a game-start instruction in the slave process (Step SH7 or SH12 of Fig. 12).

Description will be again given of Fig. 16. Processor 21 that has completed the master process or the slave process refers to an *n*=1 music of interest (Step SC6). Specifically, the variable *n* is set to 1, where n is indicated by the music order information, being the usage order of three music pieces used in the game. It is then determined whether there is a game device 2 to be replaced (Step SC7). Specifically, it is checked whether a record having substitution situation information which indicates "substitution required" is included in the game participant table T6. In a case in which, for all records RC1 to RC3, substitution situation information indicating "no substitution required" is stored, the determination result of Step SC7 changes to "NO," and the process proceeds to Step SC8.

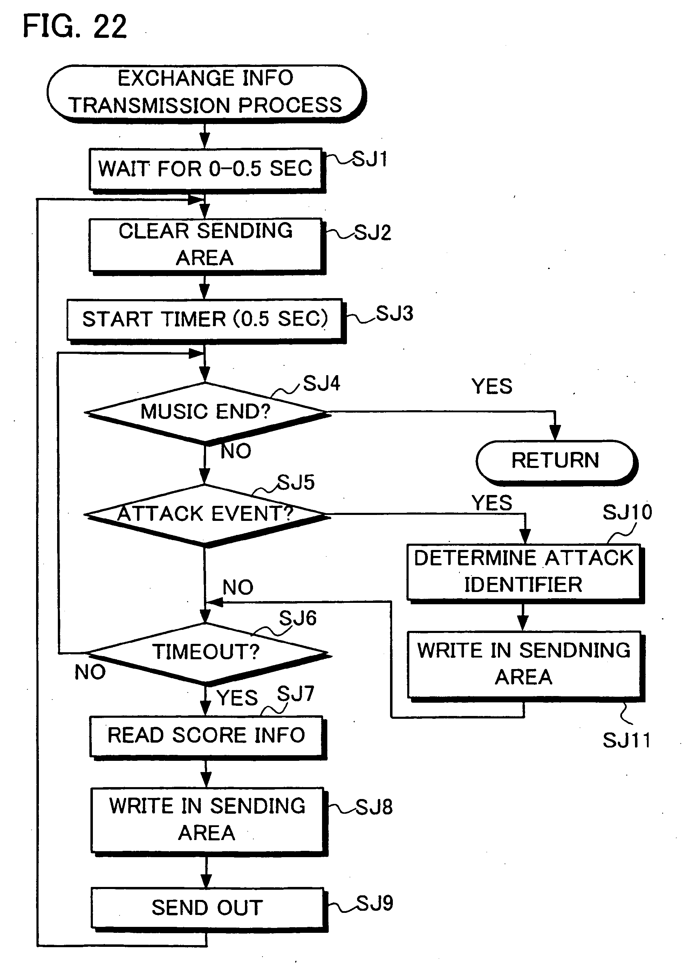

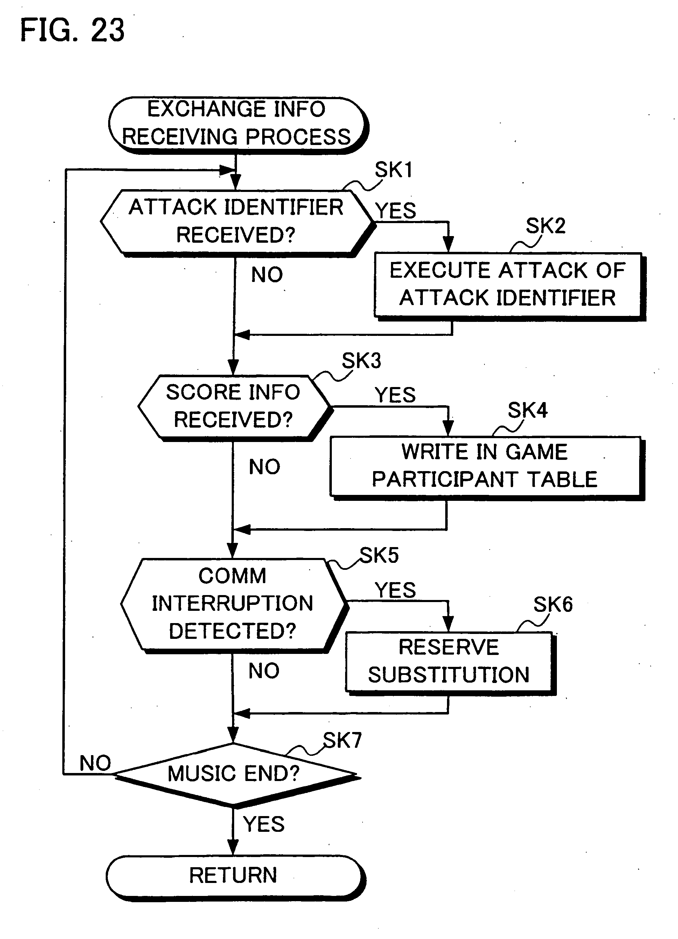

In Step SC8, processor 21 performs a mini game process for the *n*=1 music. The mini game process for the *n*th music is a process performed by each game device 2 to cause a player to play a mini game for the *n*th music. The mini game process includes a process of computing score and bonus points based on input signals from input device 23 and also a process of displaying a game screen such as shown in Fig. 2 based on the game participant table T6 while generating attack events to other players, an exchange-information-transmitting process of Fig. 22 (described later), and an exchange-information-receiving process (described later) of Fig. 23, the processes being executed in parallel.

In a left portion of a game screen displayed in this phase, there is shown a character image selected by a player using the subject game device 2, and in a right portion, there are shown partial images of character images corresponding to all the players currently playing the game (including players of game devices viewing the game image). A partial image located at the bottom corresponds to a player of the subject game device, and other partial images correspond to other players. Proximate to each partial image is a player name of a player and an image of a title corresponding to the partial image. Since this is immediately after the mini game is started, all the scores and the bonus points are 0, all the quotes are empty, and the accumulated value of the manipulation timeliness indicated by the manipulation timeliness gauge MG is 0, the attack level AL is 1, and there are no objects OB that have fallen near the horizontal line HL.

As shown in Fig. 22, in the exchange-information-transmitting process, processor 21 of game device 2 enters a standby state for a random time within a range of 0 to 0.5 seconds (Step SJ1). In the operational example shown in Fig. 12, game device 2B exits the standby state after game device 2A, and game device 2C further exits after game device 2B. Processor 21 having exited the standby state clears what is stored in the sending areas R1 and R2 (Step SJ2), and it starts a timer that runs out in 0.5 seconds (Step SJ3). From then on, until the timer runs out, processor 21 sequentially repeats a determination as to whether a music piece is finished (Step SJ4), a determination as to whether an attack event has occurred (Step SJ5), and a determination as to whether the timer has run out (Step SJ6).

In a case in which the timer runs out and the determination result of Step SJ6 changes to "YES," processor 21 reads score information from a predetermined area of storage device 27 (Step SJ7). The score information includes information indicating a score and information indicating bonus points, the score and the bonus points being displayed on display device 24, and is updated by being written in the predetermined area by a game process other than the exchange-information-transmitting process and the exchange-information-receiving process. Processor 21 then writes the read score information in the sending areas R1 and R2 (Step SJ8). Subsequently, processor 21 then sends out the information in the sending areas R1 and R2 in a method depending on a substitution situation of game device 2 associated with each sending area (Step SJ9). Specifically, processor 21, after checking the game participant table T6 for a game device 2 associated with each sending area, transmits the score information to the subject game device 2 in a case in which correspondent substitution situation information shows "no substitution required" or "substitution required," whereas in a case in which the substitution situation information indicates "substituted," passes over the score information to a virtual game device substituting for game device 2. For example, at game device 2A, in a case in which substitution situation information in each record in the game participant table T6 is "no substitution required," the information within the sending area R1 is transmitted to game device 2B, and the information within the sending area R2 is transmitted to game device 2C. If there is a record having substitution situation information "substituted," the information in the sending area that corresponds to the record is passed over to a virtual game device. In Step SJ9, processor 21 performs a quote-displaying process (described later) in a case in which the sent-out information contains an attack identifier.

On the other hand, as shown in Fig. 23, in the exchange-information-receiving process, processor 21 of game device 2 repeats the following sequential processes of (α) to (δ) until the music ends.

(α) Processor 21 determines whether it has received an attack identifier (Step SK1), and only when it determines that it has received an attack identifier does processor 21 execute a type of attack indicated by the received attack identifier (Step SK2). Specifically, processor 21 controls game device 2 so as to intercept a play of a player who is using game device 2. To be more precise, the degree of difficulty is increased by narrowing the width of the displayed game screen, darkening or swinging the screen, decreasing the volume of sound or delaying an output timing of music sound output from speaker 25. Furthermore, a game device having received an attack identifier executes an attack and also performs a quote-displaying process in Step SK2. In the quote-displaying process, in a case in which there is stored, in the game participant table T6, individual information indicating an attack quote corresponding to a game device having sent the attack identifier, processor 21 causes the attack quote to be displayed in a corresponding portion of the game screen for a certain period (for example, "Have you had enough?" in Fig. 2). Furthermore, in the quote-displaying process, in a case in which there is stored in the game participant table T6 individual information indicating an under-attack quote for the game device itself, processor 21 causes the quote to be displayed in a corresponding portion of the game screen for a certain period.

) Processor 21 determines whether it has received score information (Step SK3), and only when it determines that it has received score information, the processor updates the game participant table T6 with the received score information (Step SK4). Specifically, processor 21 stores the received score information in a corresponding record of the game participant table T6.

(γ) Processor 21 determines whether communication interruption has been detected for at least one of the other game devices participating in the game, and only when it determines that communication interruption has been detected (Step SK5), processor 21 reserves substitution of game device 2 on which communication interruption has been detected (Step SK6). Specifically, in the exchange-information-receiving process, processor 21 monitors communication for each of the other game devices 2 participating in the game, and in a case in which a predetermined time has elapsed since information was received since the last time from a game device 2, communication interruption is detected for this game device 2. Processor 21 then updates substitution situation information indicating "no substitution required" stored in the game participant table T6 in association with the game device 2 on which communication interruption has been detected, so that the substitution situation information indicates "substitution required." The substitution is actually started in the substitution starting process in Step SC11 of Fig. 16. Any arbitrary method may be used for detecting communication interruption, and for example, in a case in which game device 2 is designed to immediately reply with an acknowledgment upon receiving information, communication interruption may be detected when no acknowledgement is received within a predetermined period.

(δ) Processor 21 determines whether the music ends (Step SK7).

In the operational example of Fig. 12, in the exchange-information-transmitting process, game device 2B exits the standby state after game device 2A, and game device 2C then exits the standby state after game device 2B. Information is, therefore, transmitted first from game device 2A to game devices 2B and 2C, information is transmitted secondly from game device 2B to game devices 2A and 2C, and information is transmitted then from game device 2C to game devices 2A and 2B. The information is received by respective destination game devices 2. Since information received here is score information, in the game device 2, the determination result changes to "YES" in Step SK3 of (β) in the exchange-information-receiving process. Processor 21 of each game device 2, therefore, updates the game participant table T6 with the received score information (Step SK4). As a result, the score and the bonus points for other game participants are updated in game screens, first of game devices 2B and 2C, second of game devices 2A and 2C, and last of game devices 2A and 2B.

In the exchange-information-transmitting process (Fig. 22), the process returns to Step SJ2 after Step SJ9. That is, information written in the sending area in the immediate previous 0.5 seconds is sent out at 0.5-second intervals. The transmission and receipt of score information is repeatedly performed in 0.5-second periods.

Furthermore, in game device 2, attack events sometimes take place when a game situation falls under a particular situation. Specifically, an attack event takes place in the event that, when a particular type of object OB overlaps the horizontal line HL, an operation corresponding to this type of object OB is being performed. In the exchange-information-transmitting process at game device 2A, the determination result then changes to "YES," and processor 21 determines an attack identifier (that identifies a type of an attack) corresponding to a game situation (Step SJ10). Specifically, processor 21 determines whether the attack level AL is 1 or 2, and if individual information stored in record RC1 of the game participant table T6 indicates an attack identifier corresponding to the determined result, processor 21 selects the indicated attack identifier, and if not designated, processor 21 selects an attack identifier at random. Processor 21 then selects at random where to write the attack identifier (at least one of the sending areas R1 and R2, i.e., that which corresponds to another game device that is attacked), and writes the attack identifier additionally in the selected area (Step SJ11). Each of the sending areas R1 and R2 can simultaneously store both of an attack identifier and score information. In a case in which an attack identifier is transmitted to game device 2B as shown in Fig. 12, the attack identifier is written additionally in the sending area R1.

Subsequently, the process proceeds to Step SJ6. In a case in which the timer runs out at a later time, processor 21 writes, for the last time, the score information additionally to the sending areas R1 and R2 (Step SJ8), for transmission to each game device. For example, game device 2A transmits the attack identifier and the score information in the sending area R1 to game device 2B, and the score information in the sending area R2 to game device 2C (Step SJ9). In other words, an attack identifier is transmitted or received together with score information in the transmitting and receiving of score information repeatedly performed in 0.5-second periods. Furthermore, in Step SJ9, the quote-displaying process is performed, and an attack quote is displayed in a corresponding portion of the game screen for a certain time period, the attack quote being indicated by individual information stored in record RC1 of the game participant table T6 for the subject game device.

In game device 2B, upon receiving the attack identifier from game device 2A, the determination result of Step SK1 of (α) in the exchange-information-receiving process changes to "YES." Processor 21 of game device 2B, therefore, executes an attack indicated by the received attack identifier (Step SK2). As a result, the game progress at game device 2B changes, and its degree of difficulty is increased. Since the quote-displaying process is also performed in Step SK2, an attack quote is displayed on a corresponding portion of the game screen for a certain period of time, the attack quote being indicated in individual information stored in record RC2 of the game participant table T6 for game device 2A.

In the operational example of Fig. 12, the first music ends, without communication interruption being detected. When the music ends, the determination result of Step SJ4 changes to "YES," and the exchange-information-transmitting process ends, and the determination result of (δ) of Step SK7 changes to "YES," and the exchange-information-receiving process ends. Thus, the *n*=1 music mini game ends in game devices 2A to 2C.

Description will be again given of Fig. 16. Processor 21 then refers to the next music piece of interest (Step SC9), and it determines whether there is any such music piece (Step SC10). Specifically, n is incremented, and it is determined whether n is equal to or less than 3. Since *n*=2 satisfies n ≤ (equal to or smaller than) 3 in this case, the determination result of Step SC10 changes to "YES." Therefore, the process proceeds to Step SC7.

From then on, it returns to the same flow as described above, and the *n*=2 music mini game process (the exchange-information-transmitting process and the exchange-information-receiving process) is performed (Steps SC7 and SC8). In the operational example shown in Fig. 12, in this mini game process, it is assumed that abnormal conditions occur in game device 2A, making game devices 2B and 2C unable to communicate with game device 2A. Therefore, at game devices 2B and 2C, when a predetermined time has elapsed since the last time information was received from game device 2A, the determination result of (γ), i.e., Step SK5 of Fig. 23 changes to "YES" in the exchange-information-receiving process. Processors 21 of game devices 2B and 2C, therefore, each reserve the substitution of game device 2 on which communication interruption has occurred (Step SK6). As a result, the game participant tables T6 in game devices 2B and 2C are updated so that, in each table T6, substitution situation information showing "substitution required" is stored in record RC2 corresponding to game device 2A. On the other hand, in the exchange-information-transmitting process in game devices 2B and 2C, since there is no record having stored substitution situation information indicating "substituted" in the game participant tables T6, processor 21 keeps transmitting score information to game device 2A (Step SJ9 of Fig. 22).

From then on, it returns to the same flow as the *n*=1 music mini game process. When the second music ends, the *n*=2 music mini game processes (*n*=2) at game devices 2B and 2C end. Subsequently at game devices 2B and 2C, the same process as the *n*=1 music mini game process is performed, except that the determination result of Step SC7 changes to "YES" since substitution situation information indicating "substitution required" is stored in the game participant table T6. Processor 21, therefore, performs a substitution-start process for causing a virtual game device to substitute game device 2, which is to be replaced (Step SC11). Specifically, processor 21 generates a virtual game device, reads score information from record RC2 corresponding to game device 2A to be replaced in the game participant table T6, sets the score information to the virtual game device, and stores substitution situation information indicating "substituted," to thereby update game participant table T6. Thus, a virtual game device BA is generated at game device 2B, and a virtual game device CA is generated at game device 2C. Furthermore, a game device 2A that is now unable to communicate also generates virtual game devices each substituting for other game devices 2B and 2C.

Processor 21 then executes the *n*=3 music mini game process (Step SC8). In this mini game process, in the exchange-information-transmitting process, processor 21 of the game device 2B checks the game participant table T6, and passes the information in the sending area R1 over to the virtual game device BA (Step SJ9 of Fig. 22). On the other hand, processor 21 of game device 2C checks the game participant table T6, and passes the information in the sending area R1 over to the virtual game device CA. Game device 2A that is now unable to communicate also passes the information in the sending areas R1 and R2 over to virtual game devices each substituting for other game devices 2B and 2C, respectively. In other words, information is never exchanged via a disconnected route, thereby avoiding useless transmissions. Furthermore, in the exchange-information-receiving process, processor 21 of each game device determines that it has received an attack identifier by the attack identifier having been passed over (Step SK1 of Fig. 23), and determines that it has received score information by the score information being passed over (Step SK3) from a corresponding virtual game device. Game device 2B, therefore, can continue the multiplayer participation game with game device 2C and the virtual game device BA, and game device 2C can continue the multiplayer participation game with game device 2B and the virtual game device CA. Game device 2A can also continue the multiplayer participation game with two virtual game devices.

At game device 2B and 2C, when the third piece of music ends and the *n*=3 music mini game process ends, the same process as the process performed after the *n*=1 music mini game process is performed. However, since *n* is incremented to become 4, the determination result of Step SC10 changes to "NO." Processors 21 of game devices 2B and 2C each perform a score computation process based on score information stored in the game participant table T6 (Step SC12). In the score computation process, bonus points are converted to the score for each game device to compute a score for each music piece, the total score is obtained by summing up the scores for three music pieces, and display device 24 is caused to display the obtained total score. Processor 21 then determines a new player level and updates corresponding individual information in the game participation table T6 so that the individual information shows the game history having reflected game played this time and a new player level. As long as communication is possible, each game device transmits an update request containing the updated individual information to data server 4 (Step SC13). The game process is thus terminated.

Description is now returned to the individual information authentication/registration process of Fig. 14. Processor 41 of data server 4, when it determines that a request received from game device 2 is neither an authentication request nor a card registration request, determines whether the received information is an update request (Steps SB1, SB2, SB6 and SB8). In a case in which the received information is an update request, the determination result of Step SB8 changes to "YES." Processor 41, therefore, overwrites the information contained in the update request into individual information table T1 (Step SB9). As a result, the contents stored in the individual information table T1 are updated.

In the foregoing, the present invention has been described in relation to embodiments considered currently most practical and preferable. The present invention, however, is not limited to the embodiments disclosed in the specification, and can be modified appropriately within the gist of the invention or a range not departing from the concept understandable from the specification, and it is to be understood that a game device with such modifications is also encompassed in the scope of the present invention.

## Claims

1. A game device (2) for use in a game system having at least three game devices (2), the game device (2) comprising:
a game program executor (21) that executes a game program so as to enable a player of the game device (2) to play a game;
a controller (21) that, upon identifying at least two of said plural game devices (2) as participants in said game, causes said game program executor (21) to start said game;
a game information generator (21) that generates game information in accordance with progress of said game that is being played and transmits said generated game information to each of said at least two game devices (2);
a changer (21) that causes changes in progress of said game depending on said game information after receiving said game information generated at each of said at least two game devices (2); and
a communicator (22) that communicates with each of said at least two game devices (2) on a one-to-one basis;
wherein said game information generator (21) is adapted to transmit said generated game information to each of said at least two game devices (2) via the communicator (22),
wherein said controller (21) comprises:
a decider that decides whether, from among said game device (2) and said at least two game devices (2) which will participate in said game, said game device (2) itself will act as a master or as a slave based on a predetermined condition;
a storage device that stores communication addresses of other game devices (2) participating in said game;
a master-function executor that, in a case in which it is determined by said decider that said game device (2) itself will act as a master, waits for a game participation request from other devices that will act as slaves; upon receiving said game participation request, replies with a response indicating permission for participating in said game as long as a number of participants does not reach a predetermined number; stores, in said storage, communication addresses of said two or more other game devices (2) that will act as slaves; and transmits, to each of said other game devices (2) that respectively will act as one of said slaves, a communication address of a game device (2) that will act as another of said slaves; and
a slave-function executor that, in a case in which it is determined by said decider that said game device (2) itself will act as a slave, transmits to one of said other game devices (2) being a master, a game participation request; and stores in said storage, upon receiving, from said one game device (2) that will act as a master, a response indicating permission for participating in said game, a communication address of a game device (2) that will act as another slave and a communication address of said one game device (2) that will act as a master,
wherein said game information generator (21) uses said communication addresses stored in said storage to transmit said game information to each of said two or more other game devices (2),
wherein said master-function executor notifies said at least two other game devices (2) of a start time of said game and controls said game program executor (21) to execute said game program at said start time so that an enablement for a player's play of a game is started; and
wherein said slave-function executor, upon receiving said start time from a master, controls said game program executor (21) to execute said game program at the start time so that an enablement for a player's play of a game is started,
wherein said controller (21) comprises a communication-mode shifter that, when a predetermined condition is satisfied, shifts a communication mode between said game device (2) and said at least two other game devices (2), from a master/slave communication mode to an individual communication mode in which said game device (2) communicates with each of said at least two other game devices (2) on a one-to-one basis, so that when the predetermined condition is satisfied, the master/slave relationship is dissolved and changed to the individual communication mode and, even if one of the game devices becomes unable to communicate during the playing of a game, the game can be reliably continued by the remaining two or more game devices,
wherein said predetermined condition relating to said shifter includes said master-function executor having notified said start time of said at least two other game devices (2), or said slave-function executor having received, from said master, said notification of said start time.

2. The game device (2) of Claim 1, further comprising:
a display (24) that displays an image; and
an input device (23) that outputs a signal corresponding to a player's operation,
wherein said game program executor (21) conducts said game according to said signal, and causes an image to be displayed on said display (24), said image corresponding to progress of said game;
wherein said game information generator (21) generates, as game information, score information indicating score obtained depending on operations of said input device (23), and transmits said score information to each of said at least two other game devices (2); and
wherein said changer (21), upon receiving said score information as said game information, causes an image based on said received score information to be displayed on said display (24).

3. The game device (2) of Claim 1, further comprising:
a display (24) that displays an image; and
an input device (23) that outputs a signal corresponding to a player's operation,
wherein said game program executor (21) conducts said game according to said signal, and causes an image to be displayed on said display (24), said image corresponding to progress of said game;
wherein, in response to an operation of said input device (23), said game information generator (21) generates, as said game information, attack information specifying a game element disadvantageous to another game participant, and transmits said attack information to at least one of said at least two other game devices (2); and
wherein said changer (21), upon receiving said attack information as said game information, causes an image to be displayed on said display (24), said image being based on said game element specified by said received attack information.

4. The game device (2) of Claim 3, further comprising a destination identifier that identifies, based on a signal from said input device (23), which one of said other game devices (2) will be a destination of said attack information,
wherein said game information generator (21) transmits said generated attack information to said one game device (2) identified by said destination identifier.

5. The game device (2) of Claim 1, further comprising a detector that monitors communication with said at least two other game devices (2) participating in said game to detect an interruption of communication,
wherein said game information generator (21) suspends transmission of said game information to another game device (2) on which said communication interruption has been detected by said detector, and continues transmission of said game information to another remaining game device (2) participating in said game.

6. The game device (2) of Claim 5,
wherein said game program executor (21) plays said game as a participant substituting said game device (2) on which said communication interruption has been detected by said detector, generates said game information that was to be generated by said game device (2) on which said communication interruption has been detected, and gives said game information to said changer (21); and
wherein said changer (21) obtains said game information from said game program executor (21) instead of receiving said game information from said game device (2) on which said communication interruption has been detected by said detector, continues obtaining said game information from said another remaining game device (2) participating in said game, and causes changes in said progress of said game according to said obtained game information.

7. The game device (2) of Claim 6,
wherein said game program executor (21) sequentially plays a plurality of music pieces according to said program, and starts playing said game as a participant substituting said game device (2) on which said communication interruption has been detected by said detector, the substitution starting at start of a music piece that follows a music piece being played at the time of said communication interruption being detected by said detector.

## Patentansprüche

1. Spieleinrichtung (2) für die Verwendung in einem Spielsystem, das mindestens drei Spieleinrichtungen (2) aufweist, wobei die Spieleinrichtung (2) umfasst:
eine Spielprogrammausführungseinrichtung (21), die ein Spielprogramm ausführt, um hierdurch einem Spieler der Spieleinrichtung (2) das Spielen eines Spiels zu .erlauben;
eine Steuereinrichtung (21), die auf die Identifizierung von mindestens zwei aus der Mehrzahl von Spieleinrichtungen (2) als Teilnehmer in dem Spiel hin die Spielprogrammausführungseinrichtung (21) zu dem Starten des Spiels veranlasst;
einen Spielinformationsgenerator (21), der Spielinformationen in Abhängigkeit von dem Fortschritt des gerade gespielten Spiels generiert und die generierten Spielinformationen zu jeder von den mindestens zwei Spieleinrichtungen (2) überträgt;
eine Änderungseinrichtung (21), die Änderungen bei dem Fortschritt des Spiels in Abhängigkeit von den Spielinformationen nach dem Empfang der Spielinformationen bewirkt, die bei jeder von den mindestens zwei Spieleinrichtungen (2) generiert werden; und
eine Kommunikationseinrichtung (22), die mit jeder von den mindestens zwei Spieleinrichtungen (2) auf einer Eins - zu - Eins - Basis kommuniziert;
wobei der Spielinformationsgenerator (21) dazu ausgelegt ist, die generierten Spielinformationen zu jeder von den mindestens zwei Spieleinrichtungen (2) über die Kommunikationseinrichtung (22) zu übertragen,
wobei die Steuereinrichtung (21) aufweist:
eine Entscheidungseinrichtung, die auf der Basis einer vorbestimmten Bedingung entscheidet, ob die Spieleinrichtung (2) selbst unter der Spieleinrichtung (2) und den mindestens zwei Spieleinrichtungen (2), die an dem Spiel teilnehmen, als ein Master oder als ein Slave agiert;
eine Speichereinrichtung, die Kommunikationsadressen von anderen Spieleinrichtungen (2) speichert, die an dem Spiel teilnehmen;
eine Master-Funktionsausführungseinrichtung, die in einem Fall, bei dem durch die Entscheidungseinrichtung bestimmt ist, dass die Spieleinrichtung (2) selbst als ein Master agiert, auf eine Spielteilnahmeanforderung von anderen Einrichtungen wartet, die als Slaves agieren werden; auf den Empfang der Spielteilnahmeanforderung hin mit einer Antwort antwortet, die eine Erlaubnis für die Teilnahme an dem Spiel angibt, solange eine Anzahl von Teilnehmern eine vorbestimmte Anzahl nicht erreicht; in dem Speicher Kommunikationsadressen von den zwei oder mehr weiteren Spieleinrichtungen (2), die als Slaves agieren, speichert; und zu jeder der weiteren Spieleinrichtungen (2), die jeweils als einer der Slaves agieren werden, eine Kommunikationsadresse einer Spieleinrichtung (2) überträgt, die als ein weiterer der Slaves agieren wird; und
eine Slave-Funktionsausführungseinrichtung, die in einem Fall, bei dem durch die Entscheidungseinrichtung bestimmt wird, dass die Spieleinrichtung (2) selbst als ein Slave agieren wird, zu einer der weiteren Spieleinrichtungen (2), die ein Master ist, eine Spielteilnahmeanforderung überträgt; und in dem Speicher auf den Empfang einer eine Erlaubnis für die Teilnahme an dem Spiel anzeigenden Antwort von der einen Spieleinrichtung (2), die als ein Master agieren wird, hin eine Kommunikationsadresse einer Spieleinrichtung (2), die als ein weiterer Slave agieren wird, und eine Kommunikationsadresse von der besagten einen Spieleinrichtung (2) speichert, die als ein Master agieren wird,
wobei der Spielinformationsgenerator (21) die Kommunikationsadressen, die in dem Speicher gespeichert sind, zum Übertragen der Spielinformationen zu jeder der besagten zwei oder mehr weiteren Spieleinrichtungen (2) benutzt,
wobei die Master-Funktionsausführungseinrichtung die mindestens zwei besagten weiteren Spieleinrichtungen (2) über eine Startzeit des Spiels informiert und die Spielprogrammausführungseinrichtung (21) zur Ausführung des Spielprogramms zu der Startzeit steuert, so dass eine Ermöglichung eines Spielens eines Spiels durch einen Spieler gestartet wird; und
wobei die Slave-Funktionsausführungseinrichtung auf den Empfang der Startzeit von einem Master hin die Spielprogrammausführungseinrichtung (21) zum Ausführung des Spielprogramms zu der Startzeit steuert, so dass eine Ermöglichung eines Spielens eines Spiels durch einen Spieler gestartet wird,
wobei die Steuereinrichtung (21) eine Kommunikationsmodus-Veränderungseinrichtung aufweist, die dann, wenn eine vorbestimmte Bedingung erfüllt ist, einen Kommunikationsmodus zwischen der Spieleinrichtung (2) und den besagten mindestens zwei weiteren Spieleinrichtungen (2) von einem Master-Slave-Kommunikationsmodus zu einem individuellen Kommunikationsmodus verschiebt, bei dem die Spieleinrichtung (2) mit jeder der besagten mindestens zwei weiteren Spieleinrichtungen (2) auf einer Eins - zu - Eins - Basis kommuniziert, so dass dann, wenn eine vorbestimmte Bedingung erfüllt ist, die Master/Slave-Beziehung aufgelöst und in den individuellen Kommunikationsmodus geändert wird, und das Spiel selbst dann, wenn eine der Spieleinrichtungen während des Spielens eines Spiels unfähig zur Kommunikation wird, durch die verbleibenden zwei oder mehr Spieleinrichtungen zuverlässig fortgesetzt werden kann,
wobei die vorbestimmte Bedingung, die mit der Veränderungseinrichtung zusammenhängt, umfasst, dass die Master-Funktionsausführungseinrichtung über die Startzeit der besagten mindestens zwei weiteren Spieleinrichtungen (2) informiert hat, oder dass die Slave-Funktionsausführungseinrichtung von dem Master die Information über die Startzeit empfangen hat.

2. Spieleinrichtung (2) nach Anspruch 1, die weiterhin umfasst:
eine Anzeige (24), die ein Bild anzeigt; und
eine Eingabeeinrichtung (23), die ein Signal ausgibt, das einer Betätigung seitens eines Spieler entspricht, wobei die Spielprogrammausführungseinrichtung (21) das Spiel in Abhängigkeit von dem Signal durchführt und veranlasst, dass ein Bild auf der Anzeige (24) angezeigt wird, wobei das Bild einem Fortschritt des Spiels entspricht;
wobei der Spielinformationsgenerator (21) als eine Spielinformation eine Spielstandsinformation generiert, die den Spielstand angibt, der in Abhängigkeit von Betätigungen der Eingabeeinrichtung (23) erzielt worden ist, und die Spielstandsinformation zu jeder der besagten mindestens zwei weiteren Spieleinrichtungen (2) übertragt; und
wobei die Veränderungseinrichtung (21) auf den Empfang der Spielstandsinformation als die Spielinformation hin veranlasst, dass ein Bild auf der Basis der empfangenen Spielstandsinformation auf der Anzeige (24) angezeigt wird.

3. Spieleinrichtung (2) nach Anspruch 1, die weiterhin umfasst:
eine Anzeige (24), die ein Bild anzeigt; und
eine Eingabeeinrichtung (23), die ein Signal entsprechend einer Betätigung seitens eines Spielers ausgibt,
wobei die Spielprogrammausführungseinrichtung (21) das Spiel in Abhängigkeit von dem Signal durchführt und veranlasst, dass ein Bild auf der Anzeige (24) angezeigt wird, wobei das Bild einem Fortschritt des Spiels entspricht;
wobei der Spielinformationsgenerator (21) als Reaktion auf eine Betätigung der Eingabeeinrichtung (23) hin als die Spielinformation eine Angriffsinformation generiert, die ein Spielelement spezifiziert, das für einen anderen Spielteilnehmer nachteilig ist, und die Angriffsinformation zu mindestens einer der besagten mindestens zwei weiteren Spieleinrichtungen (2) überträgt; und
wobei die Veränderungseinrichtung (21) auf den Empfang der Angriffsinformation als die Spielinformation hin veranlasst, dass ein Bild auf der Anzeige (24) angezeigt wird, wobei das Bild auf dem Spielelement basiert, das durch die empfangene Angriffsinformation spezifiziert ist.

4. Spieleinrichtung (2) nach Anspruch 3, die weiterhin einen Zielidentifizierer umfasst, der auf der Basis eines Signals von der Eingabeeinrichtung (23) identifiziert, welche eine von den besagten weiteren Spieleinrichtungen (2) ein Ziel der Angriffsinformation sein wird,
wobei der Spielinformationsgenerator (21) die erzeugte Angriffsinformation zu der besagten einen Spieleinrichtung (2) überträgt, die durch den Zielidentifizierer identifiziert ist.

5. Spieleinrichtung (2) nach Anspruch 1, die weiterhin einen Detektor umfasst, der eine Kommunikation mit den besagten mindestens zwei weiteren Spieleinrichtungen (2) überwacht, die an dem Spiel teilnehmen, um eine Unterbrechung der Kommunikation zu erfassen,
wobei der Spielinformationsgenerator (21) eine Übertragung der Spielinformation zu einer weiteren Spieleinrichtung (2), bei der die Unterbrechung der Kommunikation durch den besagten Detektor erfasst worden ist, aussetzt, und die Übertragung der Spielinformation zu einer weiteren verbleibenden Spieleinrichtung (2) fortsetzt, die an dem Spiel teilnimmt.

6. Spieleinrichtung (2) nach Anspruch 5,
wobei die Spielprogrammausführungseinrichtung (21) das Spiel als einen Teilnehmer spielt, der die Spieleinrichtung (2) ersetzt, bei der die Unterbrechung der Kommunikation durch den Detektor erfasst worden ist, die Spielinformation, die durch die Spieleinrichtung (2), bei der die Unterbrechung der Kommunikation erfasst worden ist, hätte erzeugt werden sollen, generiert, und die Spielinformation zu der Veränderungseinrichtung (21) gibt; und
wobei die Veränderungseinrichtung (21) die Spielinformation von der besagten Spielprogrammausführungseinrichtung (21) empfängt, anstatt die Spielinformation von der Spieleinrichtung (2), bei der die Unterbrechung der Kommunikation durch den Detektor erfasst worden ist, zu empfangen, das Erhalten der Spielinformationen von der besagten weiteren verbleibenden Spieleinrichtung (2), die an dem Spiel teilnimmt, fortführt, und Änderungen in dem Fortschritt des Spiels in Übereinstimmung mit der besagten erhaltenen Spielinformation bewirkt.

7. Spieleinrichtung (2) nach Anspruch 6,
wobei die Spielprogrammausführungseinrichtung (21) eine Mehrzahl von Musikstücken in Übereinstimmung mit dem Programm sequentiell abspielt, und das Spielen des Spiels als ein Teilnehmer, der die Spieleinrichtung (2) ersetzt, bei der die Unterbrechung der Kommunikation durch den Detektor erfasst worden ist, startet, wobei die Ersetzung an dem Beginn eines Musikstücks beginnt, das einem Musikstück nachfolgt, das zu dem Zeitpunkt der Erfassung der Unterbrechung der Kommunikation durch den Detektor gespielt wird.

## Revendications

1. Dispositif de jeu (2) destiné à être utilisé dans un système de jeu comportant au moins trois dispositifs de jeu (2), le dispositif de jeu (2) comprenant :
un exécuteur de programme de jeu (21) qui exécute un programme de jeu afin de permettre à un joueur du dispositif de jeu (2) de jouer à un jeu ;
un organe de commande (21) qui, à l'identification d'au moins deux de ladite pluralité de dispositifs de jeu (2) en tant que participants au dit jeu, amène ledit exécuteur de programme de jeu (21) à commencer ledit jeu ;
un générateur d'informations de jeu (21) qui génère des informations de jeu en fonction du déroulement dudit jeu en cours et transmet lesdites informations de jeu générées à chacun desdits au moins deux dispositifs de jeu (2) ;
un changeur (21) qui provoque des changements du déroulement dudit jeu en fonction desdites informations de jeu après la réception desdites informations de jeu générées à chacun desdits au moins deux dispositifs de jeu (2) ; et
un communicateur (22) qui communique directement avec chacun desdits au moins deux dispositifs de jeu (2) ;
dans lequel ledit générateur d'informations de jeu (21) est apte à transmettre lesdites informations de jeu générées à chacun desdits au moins deux dispositifs de jeu (2) par l'intermédiaire du communicateur (22),
dans lequel ledit organe de commande (21) comprend :
un décideur qui décide si, parmi ledit dispositif de jeu (2) et lesdits au moins deux dispositifs de jeu (2) qui vont participer au dit jeu, ledit dispositif de jeu (2) proprement dit va intervenir en tant que maître ou en tant qu'esclave sur la base d'une condition prédéterminée ;
un dispositif de stockage qui stocke des adresses de communication d'autres dispositifs de jeu (2) participant au dit jeu ;
un exécuteur de fonction maître qui, dans un cas dans lequel il est déterminé par ledit décideur que ledit dispositif de jeu (2) proprement dit interviendra en tant que maître, attend une demande de participation au jeu d'autres dispositifs qui interviendront en tant qu'esclaves ; à la réception de ladite demande de participation au jeu, répond avec une réponse indiquant une permission de participation au dit jeu à condition qu'un nombre de participants n'atteigne pas un nombre prédéterminé ; stocke, dans ledit stockage, des adresses de communication desdits deux autres dispositifs de jeu (2) ou plus qui interviendront en tant qu'esclaves ; et transmet, à chacun desdits autres dispositifs de jeu (2) qui interviendront respectivement en tant que l'un desdits esclaves, une adresse de communication d'un dispositif de jeu (2) qui interviendra en tant qu'un autre desdits esclaves ; et
un exécuteur de fonction esclave qui, dans un cas dans lequel il est déterminé par ledit décideur que ledit dispositif de jeu (2) proprement dit interviendra en tant qu'esclave, transmet à l'un desdits autres dispositifs de jeu (2) étant un maître, une demande de participation au jeu ; et stocke dans ledit stockage, à la réception, dudit un dispositif de jeu (2) qui interviendra en tant que maître, une réponse indiquant une permission de participation au dit jeu, une adresse de communication d'un dispositif de jeu (2) qui interviendra en tant qu'un autre esclave et une adresse de communication dudit dispositif de jeu (2) qui interviendra en tant que maître,
dans lequel ledit générateur d'informations de jeu (21) utilise lesdites adresses de communication stockées dans ledit stockage pour transmettre lesdites informations de jeu à chacun desdits deux autres dispositifs de jeu (2) ou plus,
dans lequel ledit exécuteur de fonction maître notifie aux dits au moins deux autres dispositifs de jeu (2) une heure de début dudit jeu et commande au dit exécuteur de programme de jeu (21) d'exécuter ledit programme de jeu à ladite heure de début de sorte qu'une activation pour permettre à un joueur de jouer à un jeu est commencée ; et
dans lequel ledit exécuteur de fonction esclave, à la réception de ladite heure de début d'un maître, commande au dit exécuteur de programme de jeu (21) d'exécuter ledit programme de jeu à ladite heure de début de sorte qu'une activation pour permettre à un joueur de jouer à un jeu soit commencée,
dans lequel ledit organe de commande (21) comprend un commutateur de mode de communication qui, lorsqu'une condition prédéterminée est remplie, commute un mode de communication entre ledit dispositif de jeu (2) et lesdits au moins deux autres dispositifs de jeu (2), d'un mode de communication maître/esclave à un mode de communication individuelle dans lequel ledit dispositif de jeu (2) communique avec chacun desdits au moins deux autres dispositifs de jeu (2), de sorte que lorsque la condition prédéterminée est remplie, la relation maître/esclave est dissoute et remplacée par le mode de communication individuelle et, même si l'un des dispositifs de jeu devient incapable de communiquer en jouant à un jeu, le jeu peut être continué en toute fiabilité par les deux dispositifs de jeu ou plus restants,
dans lequel ladite condition prédéterminée concernant ledit commutateur comprend ledit exécuteur de fonction maître ayant notifié ladite heure de début desdits au moins deux autres dispositifs de jeu (2), ou ledit exécuteur de fonction esclave ayant reçu, dudit maître, ladite notification de ladite heure de début.

2. Dispositif de jeu (2) selon la revendication 1, comprenant en outre :
un affichage (24) qui affiche une image ; et
un dispositif d'entrée (23) qui délivre un signal correspondant à une opération d'un joueur,
dans lequel ledit exécuteur de programme de jeu (21) conduit ledit jeu en fonction dudit signal, et amène une image à être affichée sur ledit affichage (24), ladite image correspondant au déroulement dudit jeu ;
dans lequel ledit générateur d'informations de jeu (21) génère, en tant qu'informations de jeu, des informations de score indiquant un score obtenu en fonction d'opérations dudit dispositif d'entrée (23), et transmet lesdites informations de score à chacun desdits au moins deux autres dispositifs de jeu (2) ; et
dans lequel ledit changeur (21), à la réception desdites informations de score en tant que lesdites informations de jeu, amène une image basée sur lesdites informations de score reçues à être affichée sur ledit affichage (24).

3. Dispositif de jeu (2) selon la revendication 1, comprenant en outre :
un affichage (24) qui affiche une image ; et
un dispositif d'entrée (23) qui délivre un signal correspondant à une opération d'un joueur,
dans lequel ledit exécuteur de programme de jeu (21) conduit ledit jeu en fonction dudit signal, et amène une image à être affichée sur ledit affichage (24), ladite image correspondant au déroulement dudit jeu,
dans lequel, en réponse à une opération dudit dispositif d'entrée (23), ledit générateur d'informations de jeu (21) génère, en tant que lesdites informations de jeu, des informations d'attaque spécifiant un élément de jeu désavantageux pour un autre participant au jeu, et transmet lesdites informations d'attaque à au moins l'un desdits au moins deux autres dispositifs de jeu (2) ; et
dans lequel ledit changeur (21), à la réception desdites informations d'attaque en tant que lesdites informations de jeu, amène une image à être affichée sur ledit affichage (24), ladite image étant basée sur ledit élément de jeu spécifié par lesdites informations d'attaque reçues.

4. Dispositif de jeu (2) selon la revendication 3, comprenant en outre un identifiant de destination qui identifie, sur la base d'un signal provenant dudit dispositif d'entrée (23), lequel desdits autres dispositifs de jeu (2) sera une destination desdites informations d'attaque,
dans lequel ledit générateur d'informations de jeu (21) transmet lesdites informations d'attaque générées au dit dispositif de jeu (2) identifié par ledit identifiant de destination.

5. Dispositif de jeu (2) selon la revendication 1, comprenant en outre un détecteur qui surveille une communication avec lesdits au moins deux autres dispositifs de jeu (2) participant au dit jeu pour détecter une interruption de communication,
dans lequel ledit générateur d'informations de jeu (21) suspend une transmission desdites informations de jeu à un autre dispositif de jeu (2) sur lequel ladite interruption de communication a été détectée par ledit détecteur, et continue la transmission desdites informations de jeu à un autre dispositif de jeu restant (2) participant au dit jeu.

6. Dispositif de jeu (2) selon la revendication 5,
dans lequel ledit exécuteur de programme de jeu (21) joue au dit jeu en tant que participant se substituant au dit dispositif de jeu (2) sur lequel ladite interruption de communication a été détectée par ledit détecteur, génère lesdites informations de jeu qui devaient être générées par ledit dispositif de jeu (2) sur lequel ladite interruption de communication a été détectée, et donne lesdites informations de jeu au dit changeur (21) ; et
dans lequel ledit changeur (21) obtient lesdites informations de jeu dudit exécuteur de programme de jeu (21) au lieu de recevoir lesdites informations de jeu dudit dispositif de jeu (2) sur lequel ladite interruption de communication a été détectée par ledit détecteur, continue l'obtention desdites informations de jeu dudit un autre dispositif de jeu restant (2) participant au dit jeu, et provoque des changements dudit déroulement dudit jeu en fonction desdites informations de jeu obtenues.

7. Dispositif de jeu (2) selon la revendication 6,
dans lequel ledit exécuteur de programme de jeu (21) joue séquentiellement une pluralité de morceaux de musique en fonction dudit programme, et commence à jouer au dit jeu en tant que participant se substituant au dit dispositif de jeu (2) sur lequel ladite interruption de communication a été détectée par ledit détecteur, la substitution commençant au début d'un morceau de musique qui suit un morceau de musique joué au moment de la détection de ladite interruption de communication par ledit détecteur.
